# EUROPEAN PATENT SPECIFICATION

(11) **EP 4 086 814 B1**
(45) Date of publication and mention of the grant of the patent: **01.10.2025**
(21) Application number: 20910646.7
(22) Date of filing: 17.12.2020
(51) Int. Cl.: G06N 3/0464, G06N 3/084, G06N 3/0895, G06N 3/0495, G06N 3/094, G06N 3/045, G06N 3/096, G06N 3/082

(54) **INFORMATION PROCESSING METHOD AND INFORMATION PROCESSING SYSTEM**
INFORMATIONSVERARBEITUNGSVERFAHREN UND INFORMATIONSVERARBEITUNGSSYSTEM
PROCÉDÉ DE TRAITEMENT D'INFORMATIONS ET SYSTÈME DE TRAITEMENT D'INFORMATIONS

(30) Priority: 30.12.2019 US 201962954934 P; 29.07.2020 JP 2020128062
(43) Date of publication of application: 09.11.2022
(73) Proprietor: Panasonic Intellectual Property Corporation of America, Torrance, CA 90504 (US)
(72) Inventor: OKUNO, Tomoyuki, Osaka-shi, Osaka 540-6207 (JP); NAKATA, Yohei, Osaka-shi, Osaka 540-6207 (JP); ISHII, Yasunori, Osaka-shi, Osaka 540-6207 (JP)
(74) Representative: Novagraaf International SA
(86) International application number: PCT/JP2020/047284
(87) International publication number: WO 2021/137294

(56) References cited:
- BELAGIANNIS VASILEIOS ET AL: "Adversarial Network Compression", 23 January 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 431 - 449, ISBN: 978-3-319-10403-4, XP047501187
- SHU CHANGYONG ET AL: "Knowledge Squeezed Adversarial Network Compression", ARXIV.ORG, CORNELL UNIVERSITY LIBRARY, 201 OLIN LIBRARY CORNELL UNIVERSITY ITHACA, NY 14853, 10 April 2019 (2019-04-10), XP081167485
- ANTONIO POLINO ET AL: "Model compression via distillation and quantization", ARXIV.ORG, CORNELL UNIVERSITY LIBRARY, 201 OLIN LIBRARY CORNELL UNIVERSITY ITHACA, NY 14853, 15 February 2018 (2018-02-15), XP081215688
- BELAGIANNIS VASILEIOS, FARSHAD AZADE, GALASSO FABIO: "Adversarial Network Compression", ARXIV:1803.10750V2, 2018, Cornell University, pages 431 - 449, XP047501187, Retrieved from the Internet <URL:https://arxiv.org/pdf/1803.10750v2.pdf.> [retrieved on 20210304]
- TAKAHASHI: "TAKAHASHI Spring GAN Festival", GAN ABEJA TECH BLOG, 30 May 2017 (2017-05-30), pages 1 - 26, XP055838614, Retrieved from the Internet <URL:https://tech-blog.abeja.asia/entry/everyday_gan> [retrieved on 20210304]
- XU ZHENG, HSU YEN-CHANG, HUANG JIAWEI: "Training Shallow and Thin Networks for Acceleration via Knowledge Distillation with Conditional Adversarial Networks", ARXIV:1709.00513V2, 2018, pages 1 - 10, XP081312839, Retrieved from the Internet <URL:https://arxiv.org/pdf/1709.00513v2.pdf> [retrieved on 20210304]

## Description

### [Technical Field]

The present invention relates to an information processing method and an information processing system.

### [Background Art]

There is a technique for changing a setting for machine learning processing based on computing resources and performance specifications of a system (see Patent Literature (PTL) 1). Consequently, prediction performance is maintained to a certain degree even if the computing resources and the performance specifications are restricted.

### [Citation List]

BELAGIANNIS, V. ET AL. Adversarial Network Compression. ADVANCES IN DATABASES AND INFORMATION SYSTEMS; LECTURE NOTES IN COMPUTER SCIENCE. Cham: Springer International Publishing, January 2019, pages 431 to 449 discloses an adversarial neural network compression method in student-teacher setting.

SHU, C. ET AL. "Knowledge Squeezed Adversarial Network Compression", ARXIV.ORG. April 2019 teaches adversarial network compression by using task-driven attention as intermediate layer supervision.

POLINO, A. ET AL. "Model compression via distillation and quantization", ARXIV.ORG, February 2018 discloses neural network model compression via distillation and quantization by training a bigger neural network in full precision and projecting the weight changes to a compressed model.

### [Patent Literature]

[PTL 1] U.S. Patent Application Publication No. 2016/0328644

### [Summary of Invention]

### [Technical Problem]

However, in the technique disclosed in PTL 1, there is a problem in that, even if the prediction performance is maintained, a prediction result by a prediction model obtained by the machine learning processing before the setting change and a prediction result of a prediction model obtained by the machine learning processing after the setting change are sometimes different.

Therefore, the present invention provides an information processing method and the like for reducing a difference in prediction results that occurs between two prediction models.

### [Solution to Problem]

The invention is defined by the features of the independent claims. Some specific embodiments are defined in the dependent claims

Note that these generic or specific aspects may be implemented as a system, a device, an integrated circuit, a computer program, or a computer-readable recording medium such as a CD-ROM, or may be implemented as any combination of a system, a device, an integrated circuit, a computer program, and a recording medium.

### [Advantageous Effects of Invention]

An information processing method according to the present invention can reduce a difference in prediction results that occurs between two prediction models.

### [Brief Description of Drawings]

[FIG. 1]

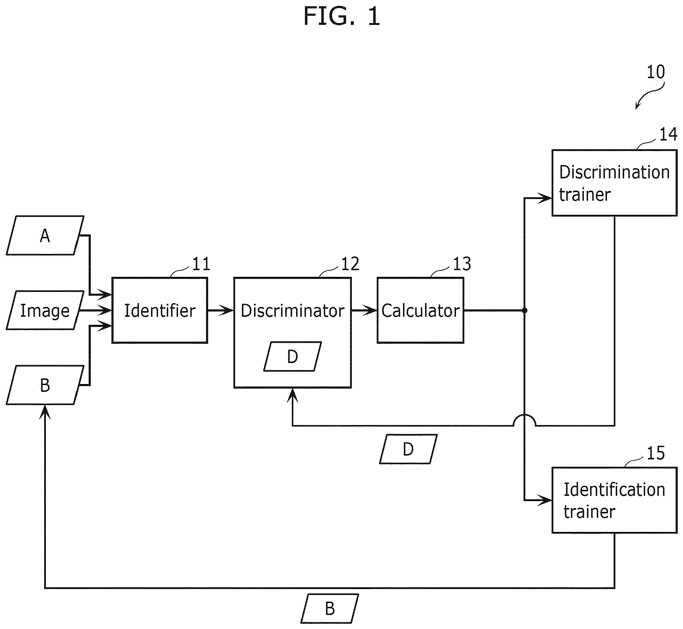

   FIG. 1 is a block diagram illustrating a functional configuration of a processing system in Embodiment 1.
[FIG. 2]

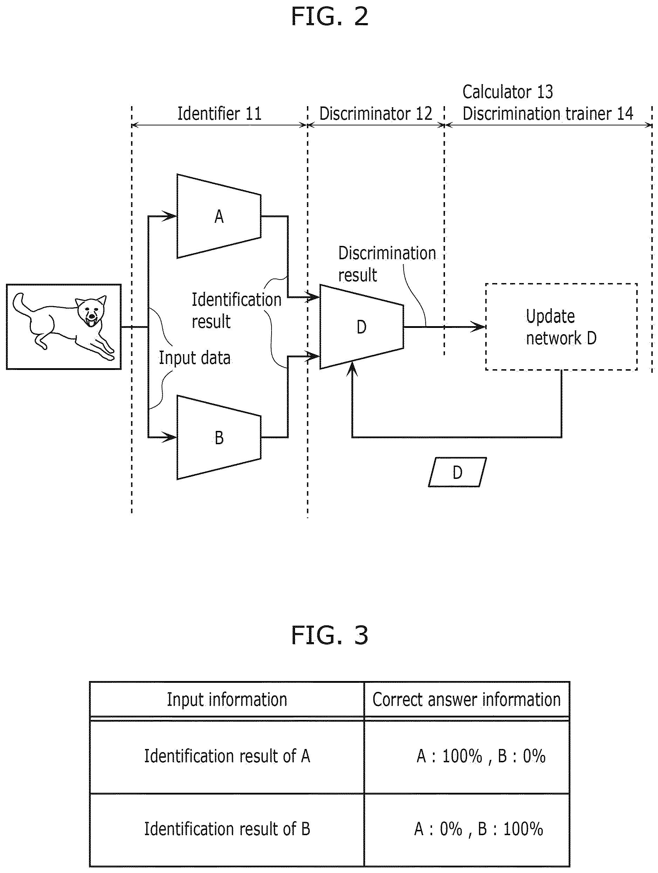

   FIG. 2 is an explanatory diagram illustrating training of a discriminating model in the processing system in Embodiment 1.
[FIG. 3]
   FIG. 3 is an explanatory diagram illustrating correct answer information used for training of the discriminating model in the processing system in Embodiment 1.
[FIG. 4]

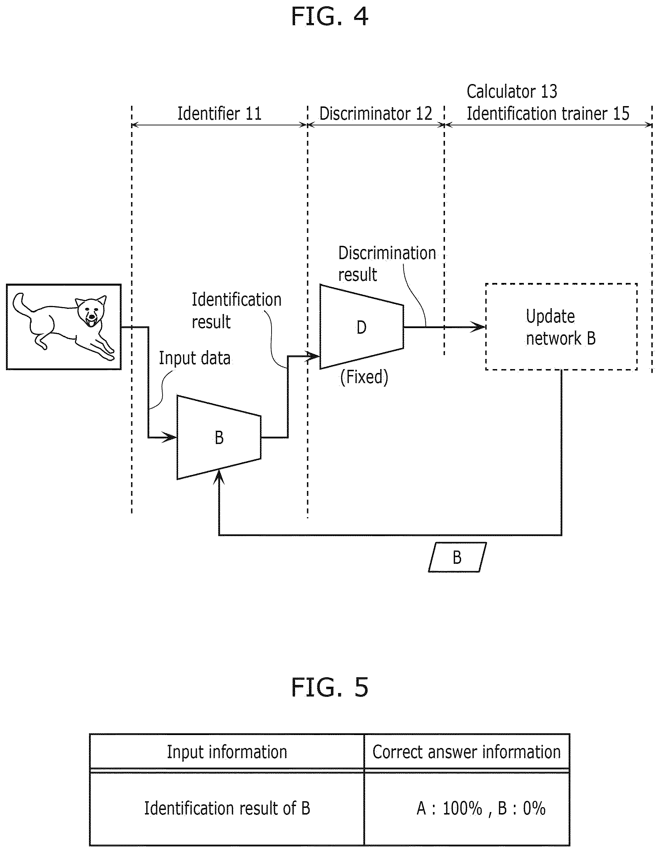

   FIG. 4 is an explanatory diagram illustrating training of an identifying model in the processing system in Embodiment 1.
[FIG. 5]
   FIG. 5 is an explanatory diagram illustrating correct answer information used for training of the identifying model in the processing system in Embodiment 1.
[FIG. 6]

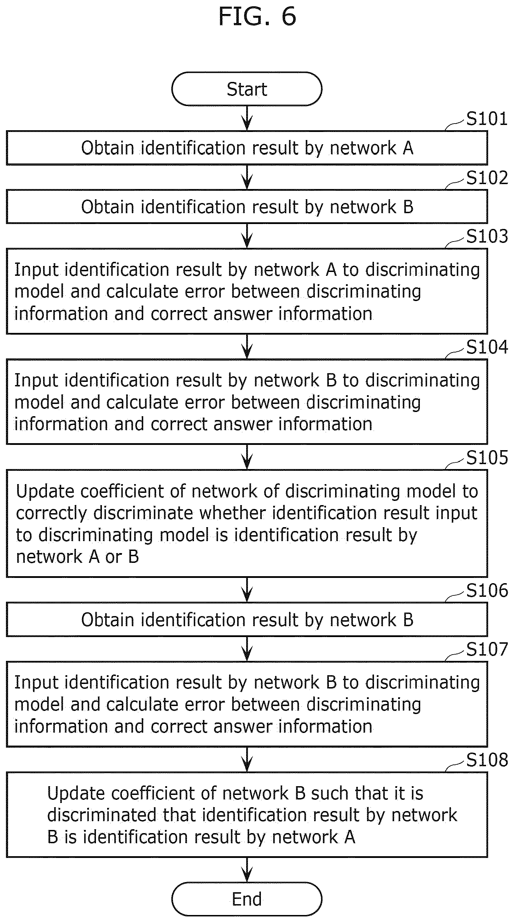

   FIG. 6 is a flowchart illustrating processing executed by the processing system in Embodiment 1.
[FIG. 7]

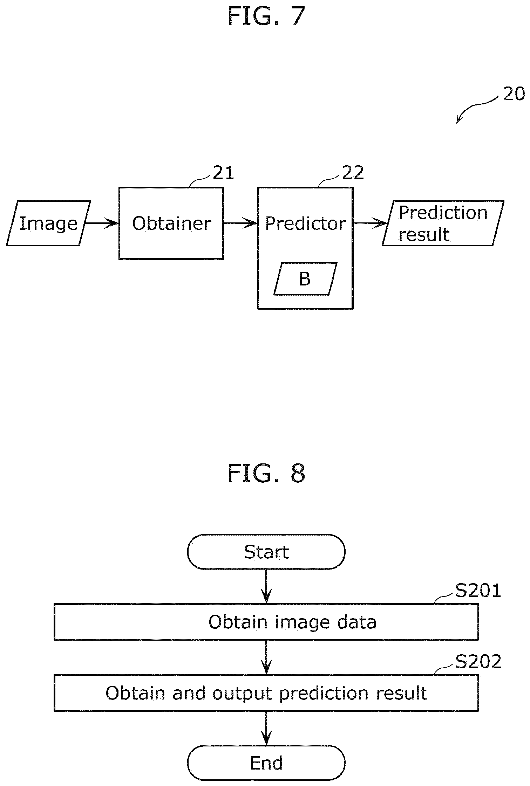

   FIG. 7 is a block diagram illustrating a functional configuration of a prediction system in Embodiment 1.
[FIG. 8]
   FIG. 8 is a flowchart illustrating processing executed by the prediction system in Embodiment 1.
[FIG. 9]

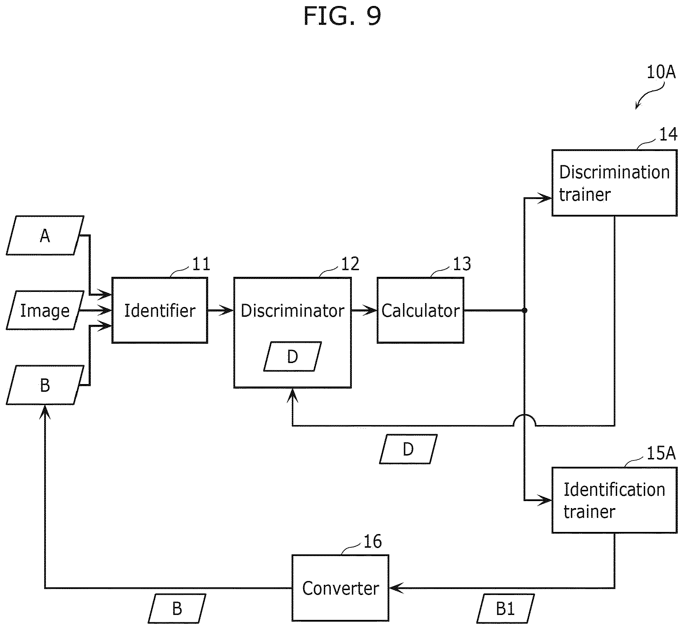

   FIG. 9 is a block diagram illustrating a functional configuration of a processing system in Embodiment 2.
[FIG. 10]

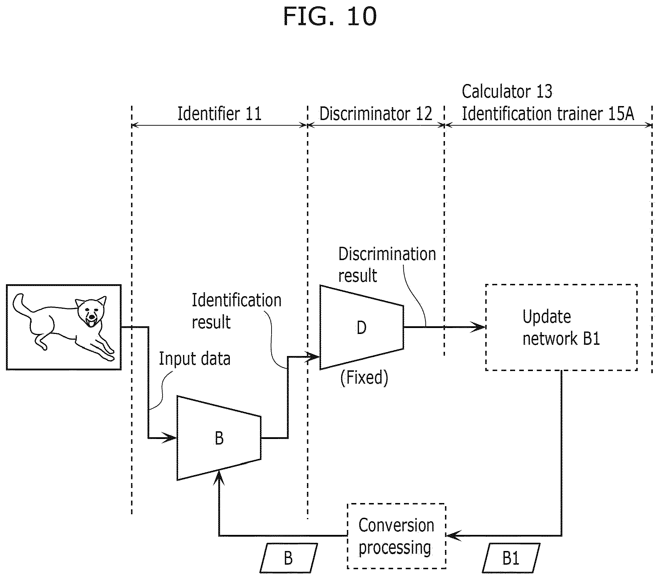

   FIG. 10 is an explanatory diagram illustrating training of an identifying model in the processing system in Embodiment 2.
[FIG. 11]

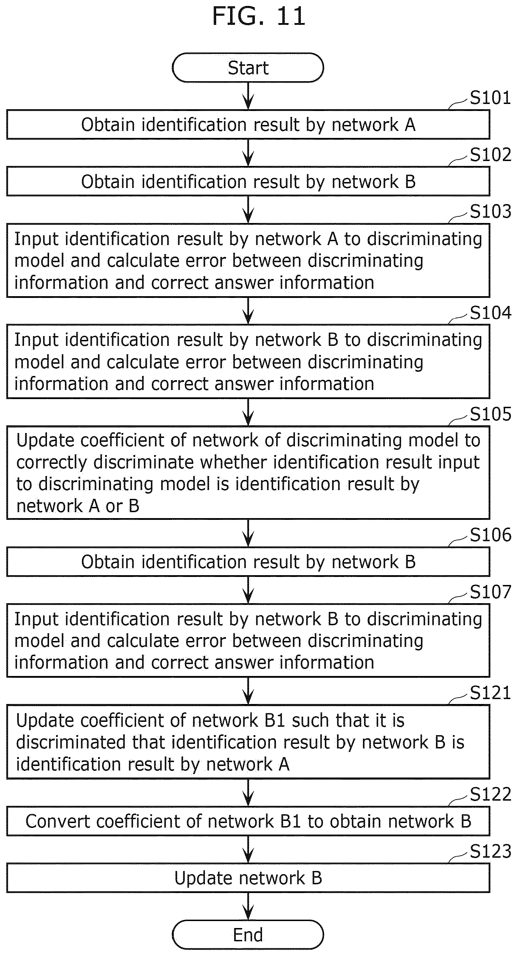

   FIG. 11 is a flowchart illustrating processing executed by the processing system in Embodiment 2.
[FIG. 12]

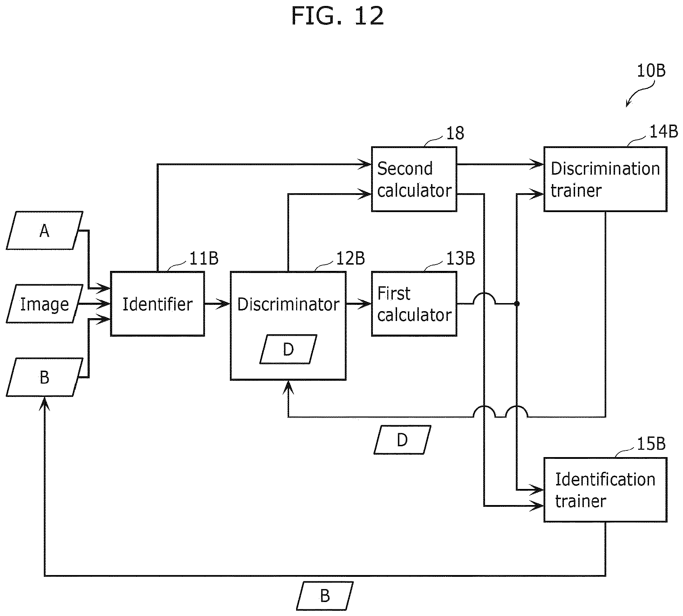

   FIG. 12 is a block diagram illustrating a functional configuration of a processing system in Embodiment 3.
[FIG. 13]

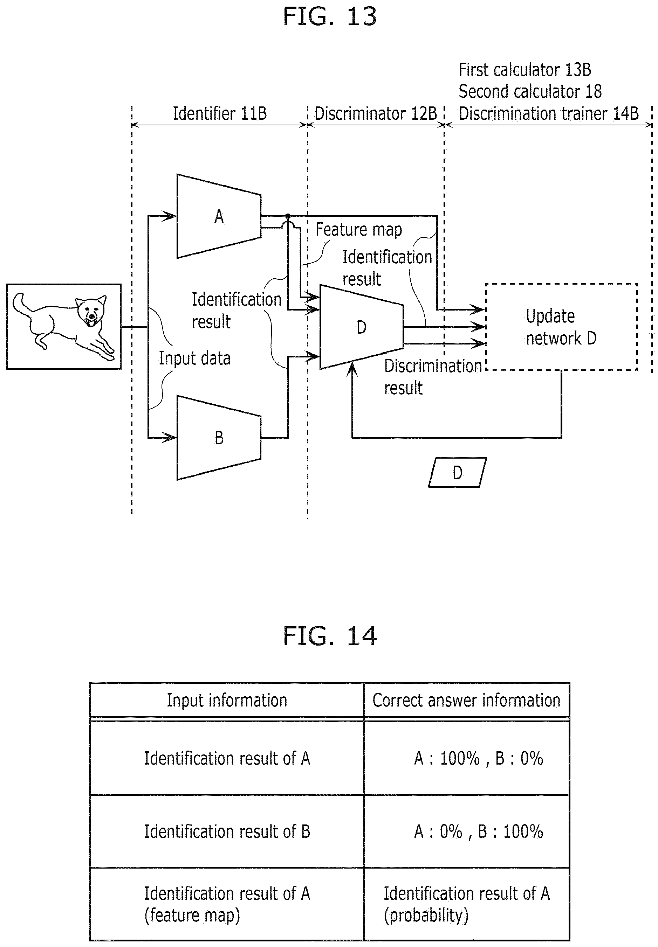

   FIG. 13 is an explanatory diagram illustrating training of a discriminating model in the processing system in Embodiment 3.
[FIG. 14]
   FIG. 14 is an explanatory diagram illustrating correct answer information used for training of the discriminating model in the processing system in Embodiment 3.
[FIG. 15]

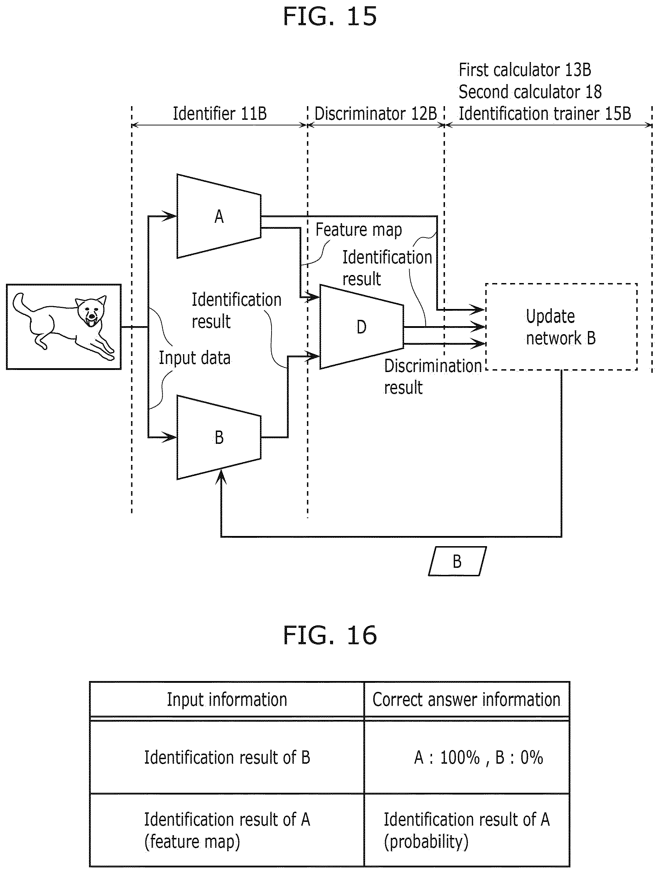

   FIG. 15 is an explanatory diagram illustrating training of an identifying model in the processing system in Embodiment 3.
[FIG. 16]
   FIG. 16 is an explanatory diagram illustrating correct answer information used for training of the identifying model in the processing system in Embodiment 3.
[FIG. 17]

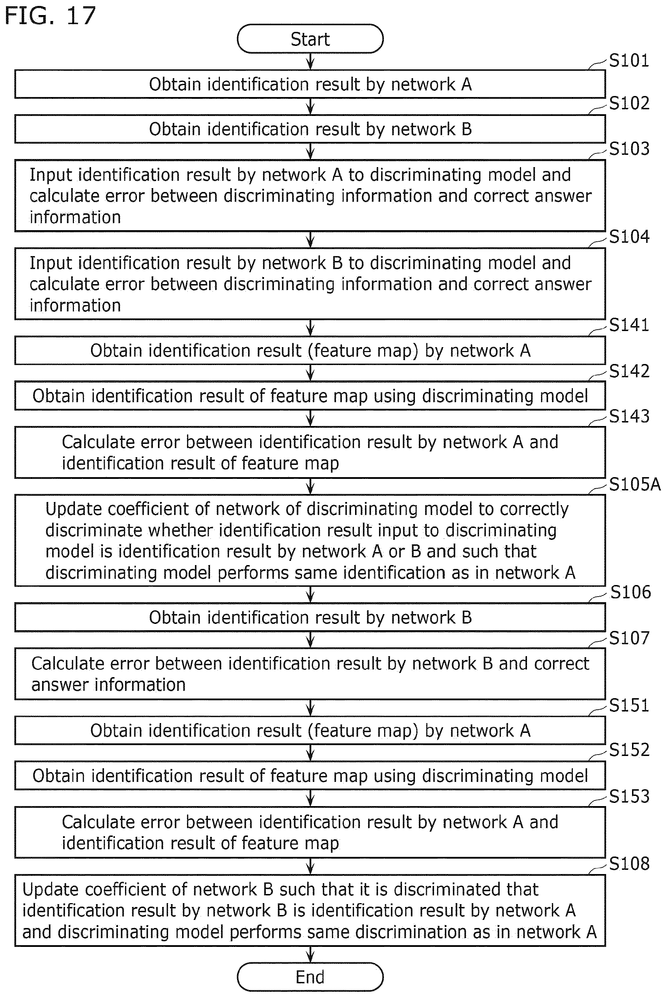

   FIG. 17 is a flowchart illustrating processing executed by the processing system in Embodiment 3.
[FIG. 18]

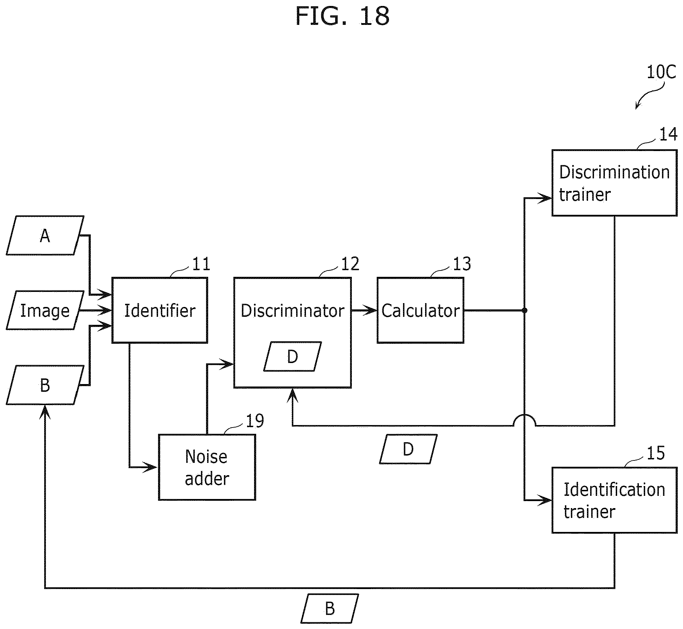

   FIG. 18 is a block diagram illustrating a functional configuration of a processing system in Embodiment 4.
[FIG. 19]

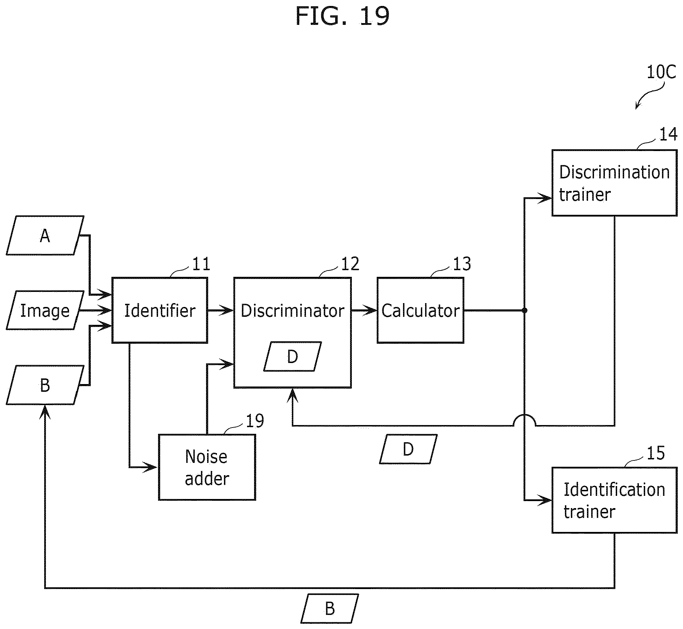

   FIG. 19 is a block diagram illustrating another example of a functional configuration of the processing system in Embodiment 4.
[FIG. 20]

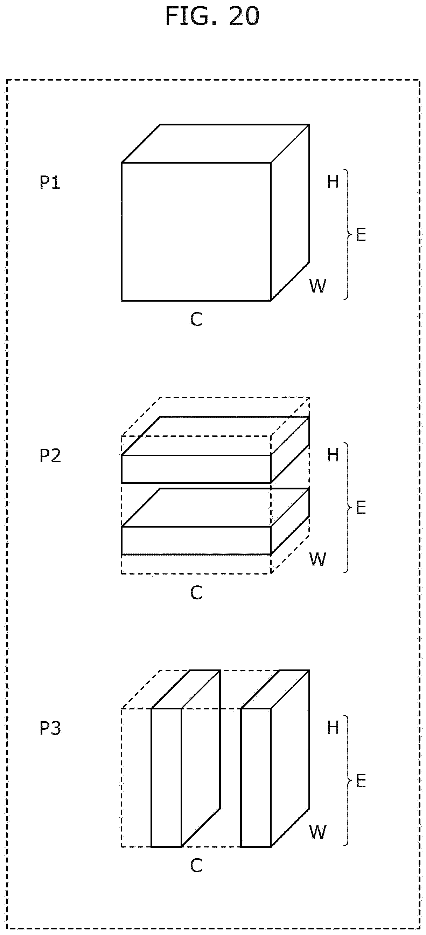

   FIG. 20 is a schematic diagram for explaining a method of adding noise added by a noise adder in Embodiment 4.
[FIG. 21]

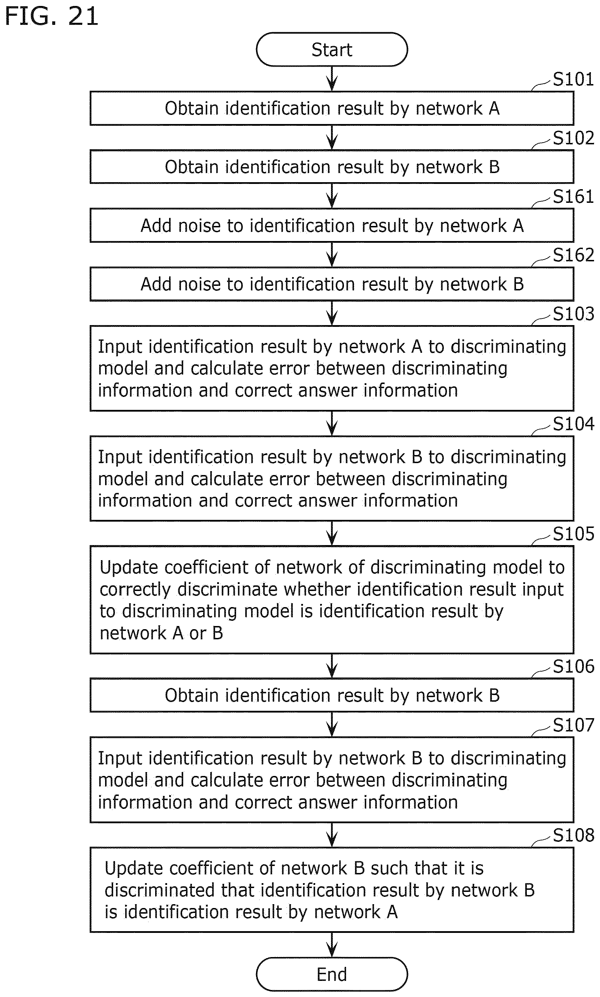

   FIG. 21 is a flowchart illustrating processing executed by the processing system in Embodiment 4.
[FIG. 22]

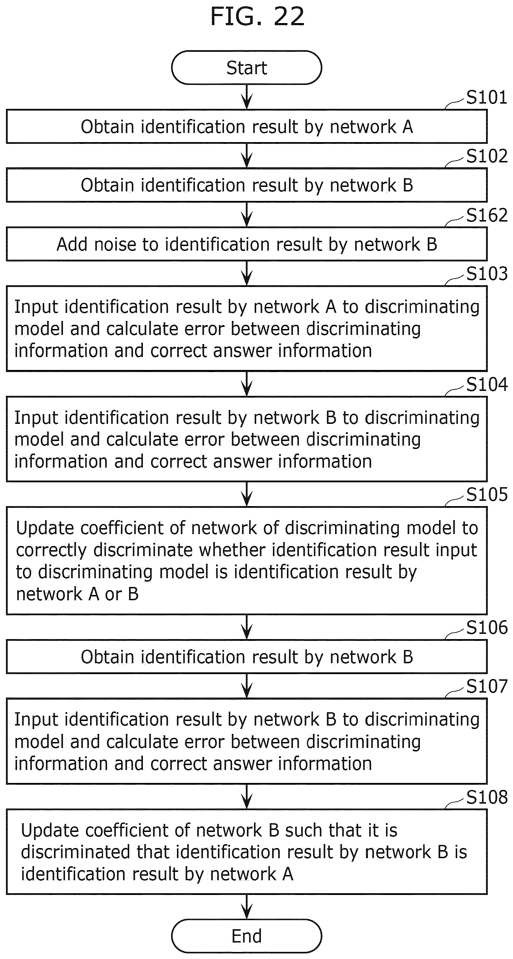

   FIG. 22 is a flowchart illustrating another example of processing executed by the processing system in Embodiment 4.
[FIG. 23]

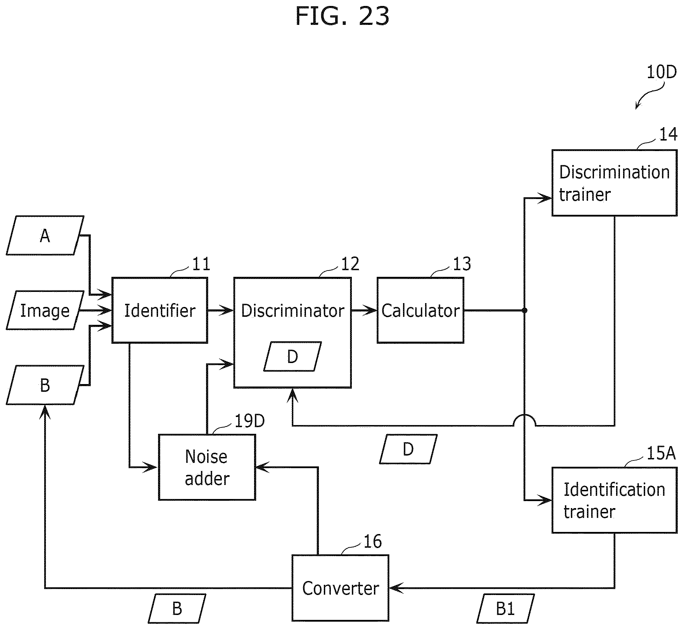

   FIG. 23 is a block diagram illustrating a functional configuration of a processing system in Embodiment 5.
[FIG. 24]

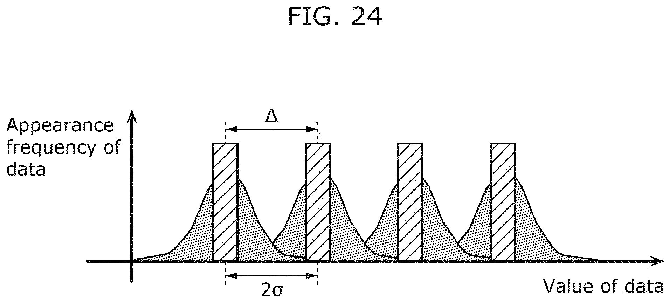

   FIG. 24 is a schematic diagram for explaining noise added by a noise adder in Embodiment 5.
[FIG. 25]

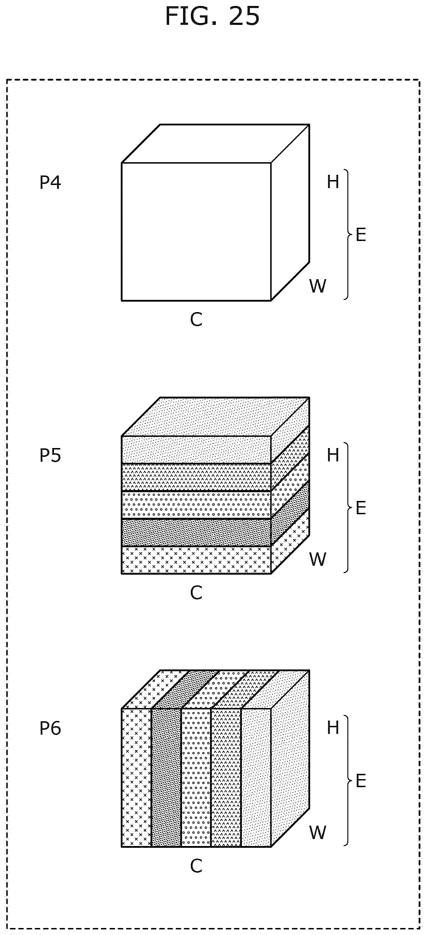

   FIG. 25 is a schematic diagram for explaining a method of adding noise added by the noise adder in Embodiment 5.
[FIG. 26]

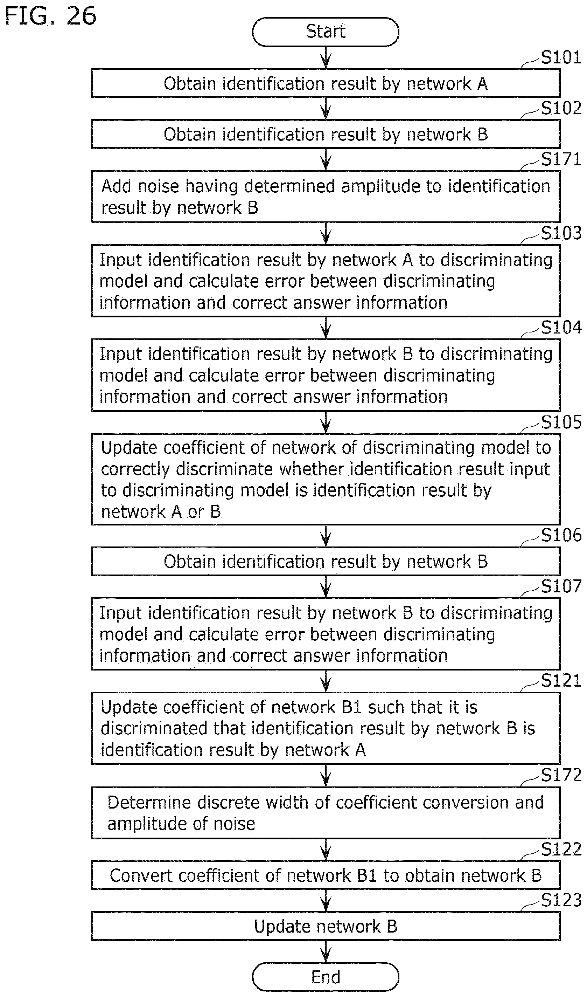

   FIG. 26 is a flowchart illustrating processing executed by the processing system in Embodiment 5.

### [Description of Embodiments]

In recent years, it has been examined to incorporate a prediction model trained by machine learning such as Deep Learning in IoT equipment. However, from the viewpoint of cost and privacy, the prediction model is requested to operate not in a Cloud computing environment or an environment in which a GPU (Graphical Processing Unit) is used but in a processor on equipment in which computing resources such as a computation ability and a memory capacity are limited. In order to perform prediction on such a processor in which the computing resources are limited, it is conceivable to compress the prediction model using a method of, for example, quantizing the prediction model.

For example, the technique disclosed in Patent Literature (PTL) 1 changes the setting for the machine learning processing based on the computing resources and the performance specifications of the system. Consequently, the prediction performance is maintained to a certain degree even if the computing resources and the performance specifications are restricted.

However, even if the prediction performance is maintained, a difference sometimes occurs between behavior of the prediction model before being compressed and behavior of the prediction model after being compressed. In other words, a difference sometimes occurs between a prediction result of the prediction model before being compressed and a prediction result of the prediction model after being compressed.

In view of the above, an information processing method according to an aspect of the present invention is an information processing method performed by a processor using memory, and includes: obtaining a first prediction result by inputting first data to a first prediction model; obtaining a second prediction result by inputting the first data to a second prediction model; obtaining first discriminating information by inputting the first prediction result to a discriminating model that outputs discriminating information indicating whether information inputted is an output of the first prediction model or an output of the second prediction model, the first discriminating information being the discriminating information on the first prediction result inputted; obtaining a first error indicating a difference between the first discriminating information and correct answer information indicating that information inputted is an output of the first prediction model; obtaining second discriminating information by inputting the second prediction result to the discriminating model, the second discriminating information being the discriminating information on the second prediction result inputted; obtaining a second error indicating a difference between the second discriminating information and correct answer information indicating that information inputted is an output of the second prediction model; training the discriminating model by machine learning to reduce the first error and the second error; obtaining a third prediction result by inputting second data to the second prediction model; obtaining third discriminating information by inputting the third prediction result to the discriminating model trained, the third discriminating information being the discriminating information on the third prediction result inputted; obtaining a third error indicating a difference between the third discriminating information and correct answer information indicating that information inputted is an output of the first prediction model; and training the second prediction model by machine learning to reduce the third error.

According to the above aspect, the above information processing method trains the discriminating model that can appropriately discriminate whether the information inputted is the first prediction result or the second prediction result and, then, trains the second prediction model using the trained discriminating model such that it is discriminated that the second prediction result is the first prediction result. As a result, the second prediction model is trained to output the same prediction result as a prediction result of the first prediction model. That is, the information processing method can reduce a difference in prediction results that occurs between the first prediction model and the second prediction model. Therefore, the information processing method can reduce a difference in prediction results that occurs between two prediction models. Specifically, the information processing method can reduce a difference in prediction results that could occur when a new second prediction model is obtained based on the first prediction model. In this way, the information processing method can reduce a difference in prediction results that could occur when a new prediction model is obtained based on a prediction model.

For example, the information processing method may further include: obtaining an other third prediction result by inputting an other item of the second data to the second prediction model trained; and further training the second prediction model based on the other third prediction result obtained.

According to the above aspect, since the trained second prediction model is further trained using new first data (in other words, the training is recursively repeated), the information processing method can further reduce the difference in prediction results that could occur when a new second prediction model is obtained based on the first prediction model. Accordingly, the information processing method can further reduce the difference in prediction results that occurs between two prediction models.

An information processing method according to an aspect of the present invention is an information processing method performed by a processor using memory, and includes: obtaining a first prediction result by inputting first data to a first prediction model; obtaining a second prediction result by inputting the first data to a second prediction model; obtaining first discriminating information by inputting the first prediction result to a discriminating model that outputs discriminating information indicating whether information inputted is an output of the first prediction model or an output of the second prediction model, the first discriminating information being the discriminating information on the first prediction result inputted; obtaining a first error indicating a difference between the first discriminating information and correct answer information indicating that information inputted is an output of the first prediction model; obtaining second discriminating information by inputting the second prediction result to the discriminating model, the second discriminating information being the discriminating information on the second prediction result inputted; obtaining a second error indicating a difference between the second discriminating information and correct answer information indicating that information inputted is an output of the second prediction model; training the discriminating model by machine learning to reduce the first error and the second error; obtaining a third prediction result by inputting second data to the second prediction model; obtaining third discriminating information by inputting the third prediction result to the discriminating model trained, the third discriminating information being the discriminating information on the third prediction result inputted; obtaining a third error indicating a difference between the third discriminating information and correct answer information indicating that information inputted is an output of the first prediction model; training a third prediction model by machine learning to reduce the third error; and updating the second prediction model through conversion processing of converting the third prediction model trained.

According to the above aspect, the above information processing method trains the discriminating model that can appropriately discriminate whether the information inputted is the first prediction result or the second prediction result and, then, trains the third prediction model using the trained discriminating model such that it is discriminated that the second prediction result is the first prediction result. The information processing method obtains the second prediction model from the trained third prediction model through conversion processing to update the second prediction model. As a result, the second prediction model is trained to output the same prediction result as a prediction result of the first prediction model. That is, the information processing method can reduce a difference in prediction results that occurs between the first prediction model and the second prediction model. Therefore, the information processing method can reduce a difference in prediction results that occurs between two prediction models. Specifically, the information processing method can reduce a difference in prediction results that could occur when a new second prediction model is obtained based on the first prediction model. In this way, the information processing method can reduce a difference in prediction results that occurs when a new prediction model is obtained based on a prediction model.

For example, the information processing method may further include: obtaining an other third prediction result by inputting an other item of the second data to the second prediction model updated; further training the third prediction model by machine learning based on the other third prediction result obtained; and further updating the second prediction model through the conversion processing on the third prediction model further trained.

According to the above aspect, since the trained third prediction model is further trained using new first data to obtain the second prediction model (in other words, the training is recursively repeated), the information processing method can further reduce the difference in prediction results that could occur when a new second prediction model is obtained based on the first prediction model. Accordingly, the information processing method can further reduce the difference in prediction results that occurs between two prediction models.

For example, the first prediction model, the second prediction model, and the third prediction model may each be a neural network model, and the conversion processing may include processing of compressing the neural network model.

According to the above aspect, the information processing method compresses the neural network model, which is the third prediction model, to obtain the second prediction model. Accordingly, the information processing method can reduce, based on the first prediction model, the difference in prediction results that could occur when a compressed new second prediction model is obtained. Accordingly, the information processing method can reduce the difference that occurs between the two prediction models when a compressed new prediction model is obtained based on the prediction model. Therefore, even in an environment in which computing resources such as IoT equipment are limited, the information processing method can apply the second prediction model close to behavior of the first prediction model while maintaining prediction performance.

For example, the processing of compressing the neural network model may include processing of quantizing the neural network model.

According to the above aspect, the information processing method obtains the second prediction model by quantizing the neural network model, which is the third prediction model. Accordingly, the information processing method can compress the neural network model without changing a network structure and suppress fluctuation in prediction performance and a prediction result (behavior) before and after compressing the neural network model.

For example, the processing of quantizing the neural network model may include processing of converting a coefficient of the neural network model from a floating-point format to a fixed-point format.

According to the above aspect, the information processing method converts the coefficient (weight) of the neural network model, which is the third prediction model, from the floating-point format to the fixed-point format to obtain the second prediction model. Accordingly, the information processing method can adapt the second prediction model to a general embedded environment while suppressing fluctuation in prediction performance and a prediction result (behavior).

For example, the processing of compressing the neural network model may include one of: processing of reducing nodes of the neural network model; and processing of reducing connections of nodes of the neural network model.

According to the above aspect, the information processing method reduces nodes of the neural network model, which is the third prediction model, or reduces connections of the nodes to obtain the second prediction model. Accordingly, since the reduction in the number of nodes and the connections of the nodes is directly connected to a reduction in a computing amount, the information processing method can adapt the second prediction model to an environment in which computing resources are severely restricted.

For example, the information processing method may further include obtaining a fourth prediction result by inputting a feature amount to the discriminating model, the feature amount being obtained by inputting the first data to the first prediction model, and the training of the discriminating model may include training the discriminating model by machine learning by further using a fourth error that indicates a difference between the first prediction result and the fourth prediction result.

According to the above aspect, the information processing method trains the discriminating model further using the difference between the first prediction result and the prediction result (the fourth prediction result) by the discriminating model for the feature value obtained from the first prediction model. Consequently, the information processing method can reduce the difference between the prediction result of the discriminating model and the prediction result of the first prediction model to thereby further reduce the difference in prediction results that could occur when a new second prediction model is obtained based on the first prediction model. Accordingly, the information processing method can further reduce the difference in prediction results that occurs between two prediction models.

For example, the information processing method may further include adding noise to the second prediction result, and the obtaining of the second discriminating information may include obtaining the second discriminating information by inputting, to the discriminating model, the second prediction result to which the noise has been added.

According to the above aspect, the information processing method can inhibit the discriminating model from being able to easily distinguish the first prediction result and the second prediction result. When training of the discriminating model advances, it becomes easy to distinguish the first prediction result and the second prediction result. The training of the second prediction model using the discriminating information sometimes stagnates. However, according to the above aspect, since noise is added to at least the second prediction result, the discrimination by the discriminating model becomes difficult. As a result, it is possible to inhibit the training of the second prediction model from stagnating.

For example, the noise may be determined based on a discrete width of the second prediction result.

According to the above aspect, it is possible to inhibit the discriminating model from discriminating a prediction result using a discrete width of the prediction result as a characteristic while leaving characteristics of the prediction result.

For example, the noise may include Gaussian noise, and an amplitude of distribution of the Gaussian noise may be determined based on a standard deviation of the Gaussian noise and the discrete width of the second prediction result.

According to the above aspect, it is possible to control a range in which the discrete width is covered by the Gaussian noise. Therefore, it is possible to determine the Gaussian noise to a degree that the discriminating model cannot discriminate and it is possible to inhibit excess and shortage of noise.

For example, the amplitude of the distribution of the Gaussian noise may be determined for each predetermined range of an element component of the second prediction result.

For example, the amplitude of the distribution of the Gaussian noise may be determined for each predetermined range of a channel component of the second prediction result.

According to the above aspect, since the amplitude is determined for each predetermined range of components, it is possible to determine noise for each prediction range of the components. Therefore, it is possible to add, for each predetermined range of the components, noise that the discriminating model has difficulty in discriminating.

For example, the noise may be added to a portion of the second prediction result, the portion having a predetermined element component.

For example, the noise may be added to a portion of the second prediction result, the portion having a predetermined channel component.

According to the above aspect, it is possible to add, for each predetermined range of the components, noise that the discriminating model has difficulty in discriminating.

For example, the information processing method may further include adding noise to the second prediction result, the obtaining of the second discriminating information may include obtaining the second discriminating information by inputting, to the discriminating model, the second prediction result to which the noise has been added, the noise may include Gaussian noise, the Gaussian noise may be determined based on a discrete width of the second prediction result, and the discrete width may be determined based on a conversion setting of the conversion processing.

According to the above aspect, since a discrete width is determined considering content of conversion and noise is determined based on the discrete width, it is possible to add suitable noise to a prediction result output by a prediction model after conversion. Therefore, it is possible to effectively suppress influence on the discrimination processing of the discriminating model due to discretization of a prediction result caused by the conversion of the prediction model.

For example, the first data and the second data may be image data.

According to the above aspect, when a new prediction model is obtained based on a prediction model used for prediction for image data, the information processing method can reduce the difference in prediction results that occurs between the two prediction models.

An information processing system according to an aspect of the present invention is an information processing system including: an obtainer that obtains third data; and a predictor that obtains a second prediction result by inputting the third data obtained by the obtainer to a second prediction model, and outputs the second prediction result, wherein the second prediction model is obtained by: obtaining a first prediction result by inputting first data to a first prediction model; obtaining a second prediction result by inputting the first data to the second prediction model; obtaining first discriminating information by inputting the first prediction result to a discriminating model that outputs discriminating information indicating whether information inputted is an output of the first prediction model or an output of the second prediction model, the first discriminating information being the discriminating information on the first prediction result inputted; obtaining a first error indicating a difference between the first discriminating information and correct answer information indicating that information inputted is an output of the first prediction model; obtaining second discriminating information by inputting the second prediction result to the discriminating model, the second discriminating information being the discriminating information on the second prediction result inputted; obtaining a second error indicating a difference between the second discriminating information and correct answer information indicating that information inputted is an output of the second prediction model; training the discriminating model by machine learning to reduce the first error and the second error; obtaining a third prediction result by inputting second data to the second prediction model; obtaining third discriminating information by inputting the third prediction result to the discriminating model trained, the third discriminating information being the discriminating information on the third prediction result inputted; obtaining a third error indicating a difference between the second discriminating information and correct answer information indicating that information inputted is an output of the first prediction model; and training the second prediction model by machine learning to reduce the third error.

According to the above aspect, the information processing system can execute, based on the existing prediction model, prediction processing using a new prediction model generated to reduce a difference in prediction results, and output a prediction result.

An information processing system according to an aspect of the present invention is an information processing system including: an obtainer that obtains third data; and a predictor that obtains a second prediction result by inputting the third data obtained by the obtainer to a second prediction model, and outputs the second prediction result, wherein the second prediction model is obtained by: obtaining a first prediction result by inputting first data to a first prediction model; obtaining a second prediction result by inputting the first data to the second prediction model; obtaining first discriminating information by inputting the first prediction result to a discriminating model that outputs discriminating information indicating whether information inputted is an output of the first prediction model or an output of the second prediction model, the first discriminating information being the discriminating information on the first prediction result inputted; obtaining a first error indicating a difference between the first discriminating information and correct answer information indicating that information inputted is an output of the first prediction model; obtaining second discriminating information by inputting the second prediction result to the discriminating model, the second discriminating information being the discriminating information on the second prediction result inputted; obtaining a second error indicating a difference between the second discriminating information and correct answer information indicating that information inputted is an output of the second prediction model; training the discriminating model by machine learning to reduce the first error and the second error; obtaining a third prediction result by inputting second data to the second prediction model; obtaining third discriminating information by inputting the third prediction result to the discriminating model trained, the third discriminating information being the discriminating information on the third prediction result inputted; obtaining a third error indicating a difference between the third discriminating information and correct answer information indicating that information inputted is an output of the first prediction model; training a third prediction model by machine learning to reduce the third error; and updating the second prediction model through conversion processing of converting the third prediction model trained.

According to the above aspect, the information processing system can execute, based on the existing prediction model, prediction processing using a new prediction model generated to reduce a difference in prediction results, and output a prediction result.

Note that these general or specific aspects may be implemented by a system, a device, an integrated circuit, a computer program, or a computer-readable recording medium such as CD-ROM, or by any combination of systems, devices, integrated circuits, computer programs, or recording media.

Hereinafter, embodiments will be described in detail with reference to the drawings.

Note that each of the embodiments described below is to illustrate a general or specific example. The numerical values, shapes, materials, constituent elements, the arrangement and connection of the constituent elements, steps, the processing order of the steps, etc., illustrated in the following embodiments are mere examples, and are therefore not intended to limit the present invention. Among the constituent elements in the following embodiments, constituent elements not recited in any one of the independent claims representing the most generic concepts are described as optional constituent elements.

### [Embodiment 1]

In the present embodiment, an information processing method and an information processing system for reducing a difference in prediction results that could occur when a new prediction model is obtained based on a prediction model are explained. In the following explanation, the information processing method is simply referred to as processing method as well and the information processing system is simply referred to as processing system as well.

FIG. 1 is a block diagram illustrating a functional configuration of processing system 10 in the present embodiment. Processing system 10 is a system for obtaining a prediction model configured to output the same prediction result as a prediction result of an existing prediction model.

As illustrated in FIG. 1, processing system 10 includes identifier 11, discriminator 12, calculator 13, discrimination trainer 14, and identification trainer 15. The functional units included in processing system 10 can be realized by a processor (for example, a CPU (Central Processing Unit)) (not illustrated) executing a predetermined program using a memory. Note that processing system 10 may be realized as one device or may be realized by a plurality of devices capable of communicating with one another.

Identifier 11 is a functional unit that identifies data input thereto (referred to as input data as well) using an identifying model, which is a prediction model. The identifying model is, for example, a neural network model. The input data is, for example, image data. This case is explained as an example. However, sensing data capable of obtaining correct answer data such as voice data output from a microphone, point group data output from a radar such as LiDAR (Light Detection and Ranging), pressure data output from a pressure sensor, temperature data or humidity data output from a temperature sensor or a humidity sensor, or scent data output from a scent sensor can be used as the input data. The input data is equivalent to first data and second data.

Identifier 11 obtains networks A and B as neural networks used for the identifying model for identifying the input data. More specifically, identifier 11 obtains coefficients included in respective networks A and B. An identifying model using network A is equivalent to the "existing prediction model" and is referred to as first prediction model as well. An identifying model using network B is equivalent to the new prediction model configured to output the same prediction result as a prediction result of the existing prediction model and is referred to as second prediction model as well. The identifying model using network B is trained by identification trainer 15 to output the same identification result as an identification result of the identifying model using network A (as explained below).

Identifier 11 outputs an identification result (referred to as first prediction result as well) indicating a result of identifying the input data with the identifying model using network A. Identifier 11 outputs an identification result (referred to as second prediction result as well) indicating a result of identifying the input data using network B. Identifier 11 outputs an identification result (referred to as third prediction result as well) indicating a result of identifying the input data with the identifying model using network B trained by identification trainer 15.

The identification results are information indicating a result of identifying the image data, which is the input data, and includes, for example, information indicating an object or a situation imaged in the image data or an attribute of the object or the situation. The identification result may include a feature value, which is information indicating a feature of the input data. The identification results may be intermediate data of processing of the identifying model or the feature value may be the intermediate data.

Discriminator 12 is a functional unit that obtains the identification result by identifier 11 and discriminates whether the obtained identifying information is a result of identification by the identifying model using network A or a result of identification by the identifying model using network B. Discriminator 12 performs the discrimination using a prediction model (referred to as discriminating model as well). The discriminating model is, for example, a neural network model.

Discriminator 12 obtains, from identifier 11, a result of identification by the identifying model using network A (referred to identification result by network A as well) and a result of identification by the identifying model using network B (referred to as identification result by network B as well). Discriminator 12 inputs the identification results obtained from identifier 11 to a discriminating model and obtains discriminating information about the input identification result. The discriminating information is information indicating whether the input identification result is the identification result by network A or the identification result by network B and is, for example, information probabilistically indicating whether the input identification result is the identification result by network A or the identification result by network B.

Calculator 13 is a functional unit that calculates an error between the discriminating information output by discriminator 12 and correct answer information. Calculator 13 obtains error information (referred to as first error as well) indicating a difference between the discriminating information indicating the result of the discrimination by discriminator 12 with respect to the identification result by network A and the correct answer information. Here, the correct answer information is information indicating that the discriminating information is the identification result by network A. The error information is calculated by being computed by a loss function retained by calculator 13 using the discriminating information and the correct answer information. The loss function is, for example, a function that makes use of a square sum error of probabilities respectively included in the discriminating information and the correct answer information. This case is explained as an example but is not limited to this.

Calculator 13 obtains error information (referred to as second error as well) indicating a difference between the discriminating information indicating the result of the discrimination by discriminator 12 with respect to the identification result by network B and the correct answer information. Here, the correct answer information is information indicating that the discriminating information is the identification result by network B. The error information is the same as that obtained when network A is used.

Calculator 13 obtains error information (referred to as third error as well) indicating a difference between the discrimination result indicating the result of the discrimination by discriminator 12 with respect to the identification result (equivalent to a third prediction result) by trained network B and the correct answer information. Here, the correct answer information is information indicating that the discriminating information is the identification result by network A.

Discrimination trainer 14 is a functional unit that trains a discriminating model with machine learning. Discrimination trainer 14 obtains the first error and the second error calculated by calculator 13 and trains the discriminating model with machine learning to reduce the first error and the second error. Discrimination trainer 14 refers to the loss function retained by calculator 13, determines how a coefficient included in the discriminating model should be adjusted to reduce the first error and the second error, and updates the coefficient included in the discriminating model such that the first error and the second error decrease. A well-known technique such as a method of using a square sum error can be adopted as the loss function.

Identification trainer 15 is a functional unit that trains the identifying model using network B with machine learning. Identification trainer 15 obtains the third error calculated by calculator 13 and trains the identifying model using network B with machine learning to reduce the third error. Identification trainer 15 refers to the loss function retained by calculator 13, determines how a coefficient included in network B should be adjusted to reduce the third error, and updates the coefficient included in network B such that the third error decreases. At this time, identification trainer 15 does not change and fixes the coefficient included in the discriminating model. Network B trained by the update of the coefficient is input to identifier 11.

Further, identifier 11 inputs new input data to the identifying model using network B updated by identification trainer 15 to obtain a new identification result. Discriminator 12, calculator 13, discrimination trainer 14, and identification trainer 15 execute the same processing as the above by using the obtained identification result as the identifying information, whereby processing system 10 further trains network B.

In the following explanation, an overview of update of network B by processing system 10 is explained. The update of network B is performed by repeatedly executing training of the discriminating model and training of the identifying model using network B. In the following explanation, (1) the training of the discriminating model and (2) the training of the identifying model using network B is explained.

### (1) Training of the discriminating model

FIG. 2 is an explanatory diagram illustrating the training of the discriminating model in processing system 10 in the present embodiment. FIG. 3 is an explanatory diagram illustrating correct answer information used for the training of the discriminating model in processing system 10 in the present embodiment.

Identifier 11 executes identification processing for identifying an image with each of the identifying model using network A and the identifying model using network B and outputs an identification result. The identification result is, for example, information "dog: 70%, cat: 30%". The identification result means that a probability that an object imaged in the input image is a dog is 70% and a probability that the object is a cat is 30%. The same applies below. The identification result output by identifier 11 is provided to discriminator 12.

Discriminator 12 discriminates, with a discriminating model using network D, whether the identification result provided from identifier 11 is an identification result of identification by the identifying model using network A or an identification result of identification by the identifying model using network B. The discriminating information is, for example, information "A: 70%, B: 30%". The identification result means that a probability that the identification result is the identification result of identification by the identifying model using network A is 70% and a probability that the identification result is the identification result of identification by the identifying model using network B is 30%.

Calculator 13 calculates, about network A, an error between the discriminating information output by discriminator 12 and the correct answer information. Specifically, when discriminating information "A: 70%, B:30%" is obtained as a discrimination result for the identification result in the identifying model using network A, calculator 13 compares the discriminating information and correct answer information "A: 100%, B: 0%" indicating the identification result in the identifying model using network A (see FIG. 3). Calculator 13 obtains an error calculated from 0.09, which is a square of a difference (1-0.7) between probabilities relating to network A in the discriminating information and the correct answer information.

About network B, in the same manner as explained above, calculator 13 calculates an error between the discriminating information output by discriminator 12 and the correct answer information. That is, when discriminating information "A: 70%, B: 30%" is obtained as a discrimination result for the identification result in the identifying model using network B, calculator 13 compares the discriminating information and correct answer information "A: 0%, B: 100%" indicating the identification result in the identifying model using network B (see FIG. 3). Calculator 13 obtains an error calculated from 0.49, which is a square of a difference (1-0.3) between probabilities relating to network B in the discriminating information and the correct answer information.

Discrimination trainer 14 adjusts a coefficient included in network D to reduce the error calculated by calculator 13. At this time, discrimination trainer 14 refers to a loss function and adjusts the coefficient to reduce the error by adjusting the coefficient. In this way, discrimination trainer 14 updates network D by adjusting the coefficient of network D.

### (2) Training of the identifying model using network B

FIG. 4 is an explanatory diagram illustrating training of an identifying model in processing system 10 in the present embodiment. FIG. 5 is an explanatory diagram illustrating correct answer information used for the training of the identifying model in processing system 10 in the present embodiment.

As illustrated in FIG. 4, when an input image is input to identifier 11, identifier 11 executes identification processing for identifying an image with the identifying model using network B and outputs an identification result. The identification result is, for example, information "dog: 80%, cat: 20%". The identification result output by identifier 11 is provided to discriminator 12.

Discriminator 12 discriminates, with the discriminating model using network D, whether the identification result provided from identifier 11 is an identification result of identification by the identifying model using network A or an identification result of identification by the identifying model using network B. A discrimination result is obtained as, for example, discriminating information "A: 20%, B: 80%".

Calculator 13 calculates a difference between the discriminating information output by discriminator 12 and correct answer information. Specifically, when discriminating information "A: 20%, B: 80%" is obtained as a discrimination result for the identification result in the identifying model using network B, calculator 13 compares the discrimination result and correct answer information "A: 100%, B: 0%" indicating the identification result in the identifying model using network A (see FIG. 5). Calculator 13 obtains an error calculated from 0.64, which is a square of a difference (1-0.2) between probabilities relating to network A in the discriminating information and the correct answer information.

Identification trainer 15 adjusts the coefficient included in network B to reduce the error calculated by calculator 13. At this time, identification trainer 15 does not change and fixes the coefficient included in network D.

When adjusting the coefficient included in network B, identification trainer 15 adjusts the coefficient to reduce the error with the adjustment of the coefficient. In this way, identification trainer 15 updates network B by adjusting the coefficient of network B.

Processing executed by processing system 10 configured as explained above is explained.

FIG. 6 is a flowchart illustrating processing (referred to as a processing method as well) executed by processing system 10 in the present embodiment.

In step S101, identifier 11 inputs input data to the identifying model using network A and obtains an identification result by network A.

In step S102, identifier 11 inputs input data to the identifying model using network B and obtains an identification result by network B.

In step S103, discriminator 12 inputs the identification result by network A obtained by identifier 11 in step S101 to the discriminating model to obtain discriminating information. Calculator 13 calculates an error between the discriminating information obtained by discriminator 12 and correct answer information. The correct answer information is information indicating that the input identification result is an identification result by network A.

In step S104, discriminator 12 inputs the identification result by network B obtained by identifier 11 in step S102 to the discriminating model to obtain discriminating information. Calculator 13 calculates an error between the discrimination result obtained by discriminator 12 and correct answer information. The correct answer information is information indicating that the input identification result is an identification result by network B.

In step S105, discrimination trainer 14 updates a coefficient of a network of the discriminating model using the errors calculated in steps S103 and S104 such that the discriminating model can correctly discriminate whether the identification result input to the discriminating model is the identification result by network A or B. Consequently, the discriminating model is trained.

In step S106, identifier 11 inputs input data to the identifying model using network B and obtains an identification result by network B.

In step S107, discriminator 12 inputs the identification result by network B obtained by identifier 11 in step S106 to the discriminating model to obtain discriminating information. Calculator 13 calculates an error between the discriminating information obtained by discriminator 12 and correct answer information. The correct answer information is information indicating that the input identification result is the identification result by network A.

In step S108, identification trainer 15 updates the coefficient of network B using the error calculated in step S107 such that it is discriminated by discriminator 12 that the identification result by network B is the identification result of network A.

According to the series of processing explained above, processing system 10 trains a discriminating model that can appropriately discriminate whether information inputted is the identification result by network A or the identification result by network B and, then, updates the coefficient of network B such that it is discriminated that the identification result by network B is the identification result of network A to thereby train the identifying model using network B. As a result, the identifying model using network B is trained to output the same prediction result as a prediction result of the identifying model using network A. In this way, processing system 10 can reduce, based on the identifying model using network A, a difference in identification results that could occur when the identifying model using network B is obtained.

Subsequently, prediction system 20 using network B obtained by processing system 10 is explained. A prediction system is referred to as information processing system as well.

FIG. 7 is a block diagram illustrating a functional configuration of prediction system 20 in the present embodiment.

As illustrated in FIG. 7, prediction system 20 includes obtainer 21 and predictor 22. The functional units included in prediction system 20 can be realized by a processor (for example, a CPU) (not illustrated) executing a predetermined program using a memory.

Obtainer 21 is a functional unit that obtains data input thereto (referred to as input data as well). The input data is, for example, image data like the data input to processing system 10. Obtainer 21 provides the obtained input data to predictor 22. The input data is equivalent to third data.

Predictor 22 is a functional unit that inputs the input data obtained by obtainer 21 to a prediction model (equivalent to a second prediction model) and obtains and outputs a prediction result. The prediction model used by predictor 22 to obtain a prediction result is an identifying model using network B trained by processing system 10.

FIG. 8 is a flowchart illustrating processing executed by prediction system 20 in the present embodiment.

As illustrated in FIG. 8, in step S201, obtainer 21 obtains input data.

In step S202, predictor 22 inputs the input data obtained by obtainer 21 to the prediction model and obtains and outputs a prediction result.

In this way, prediction system 20 can execute, based on the existing prediction model, the prediction processing using a new prediction model generated to reduce a difference between prediction results and output a prediction result.

As explained above, the information processing method in the present embodiment trains the discriminating model that can appropriately discriminate whether the information inputted is the first prediction result or the second prediction result and, then, trains the second prediction model using the trained discriminating model such that it is discriminated that the second prediction result is the first prediction result. As a result, the second prediction model is trained to output the same prediction result as a prediction result of the first prediction model. That is, the information processing method can reduce a difference in prediction results that occurs between the first prediction model and the second prediction model. Therefore, the information processing method can reduce a difference in prediction results that occurs between two prediction models. Specifically, the information processing method can reduce a difference in prediction results that could occur when a new second prediction model is obtained based on the first prediction model. In this way, the information processing method can reduce a difference in prediction results that could occur when a new prediction model is obtained based on a prediction model.

Since the trained second prediction model is further trained using new first data (in other words, the training is recursively repeated), the information processing method can further reduce the difference in prediction results that could occur when a new second prediction model is obtained based on the first prediction model. Accordingly, the information processing method can further reduce the difference in prediction results that occurs between the two prediction models.

When a new prediction model is obtained based on a prediction model used for prediction for image data, the information processing method can reduce the difference in prediction results that occurs between the two prediction models.

The information processing system can execute, based on the existing prediction model, prediction processing using a new prediction model generated to reduce a difference in prediction results, and output a prediction result.

### [Embodiment 2]

In the present embodiment, about an information processing method and an information processing system for reducing a difference in prediction results that could occur when a new prediction model is obtained based on a prediction model, a configuration different from the configuration in Embodiment 1 is explained. Note that the same constituent elements as the constituent elements in Embodiment 1 are denoted by the same reference numerals and signs and detailed explanation of the constituent elements is omitted.

FIG. 9 is a block diagram illustrating a functional configuration of processing system 10A in the present embodiment. Processing system 10A in the present embodiment is a system for obtaining a new prediction model configured to output the same prediction result as a prediction result of the existing prediction model.

Here, a format of the existing prediction model and a format of the new prediction model are different. Specifically, a coefficient of a network configuring the existing prediction model is represented by a floating-point format and a coefficient of a network configuring the new prediction model is represented by a fixed-point format. In this case, processing system 10A is considered to be a system for quantizing the existing prediction model represented by the floating-point format to obtain the new network represented by the fixed-point format.

As illustrated in FIG. 9, processing system 10A includes identifier 11, discriminator 12, calculator 13, discrimination trainer 14, identification trainer 15A, and converter 16. Like the functional units in Embodiment 1, the functional units included in processing system 10A can be realized by a processor (for example, a CPU) (not illustrated) executing a predetermined program using a memory.

Among the constituent elements of processing system 10A, identifier 11, discriminator 12, calculator 13, and discrimination trainer 14 are the same as those of processing system 10 in Embodiment 1. Identification trainer 15A and converter 16 are explained in detail below.

Identification trainer 15A is a functional unit that trains an identifying model using network B1 with machine learning. Identification trainer 15A obtains a third error calculated by calculator 13 and trains the identifying model using network B1 with machine learning to reduce the third error. Identification trainer 15A refers to a loss function retained by calculator 13, determines how a coefficient included in network B1 should be adjusted to reduce the third error, and updates the coefficient included in network B1 such that the third error decreases. At this time, identification trainer 15A does not change and fixes a coefficient included in a discriminating model. Identification trainer 15A provides trained network B1 to converter 16.

Converter 16 is a functional unit that performs conversion processing on the coefficient of network B1 to obtain network B. Converter 16 obtains network B1 trained by identification trainer 15A and applies predetermined conversion processing to the coefficient of network B1 to thereby update network B.

Further, identifier 11 inputs new input data to the identifying model using updated network B to obtain a new identification result. By using the obtained identification result as the identifying information, discriminator 12, calculator 13, discrimination trainer 14, identification trainer 15A, and converter 16 execute the same processing as the processing explained above. Consequently, processing system 10A further updates network B.

Note that the conversion processing includes, for example, processing for compressing network B1. The processing for compressing network B1 includes, for example, processing for quantizing network B1. For example, when network B1 is a neural network model, the processing for quantizing network B1 may include processing for converting a coefficient of the neural network model from the floating-point format into the fixed-point format. The processing for compressing network B1 may include processing for reducing nodes of the neural network model or processing for reducing connection of the nodes of the neural network model.

FIG. 10 is an explanatory diagram illustrating training of an identifying model in processing system 10A in the present embodiment.

Processing from when an input image is input to identifier 11 until when an error is calculated by calculator 13 is the same as the processing in processing system 10 in Embodiment 1.

After the error is calculated by calculator 13, identification trainer 15A adjusts the coefficient included in network B1 to reduce the error calculated by calculator 13. At this time, identification trainer 15A does not change and fixes the coefficient included in network D.

When adjusting the coefficient included in network B1, identification trainer 15A refers to the loss function and adjusts the coefficient to reduce the error by adjusting the coefficient. In this way, identification trainer 15A adjusts the coefficient of network B1 to thereby update network B1.

Converter 16 obtains network B1 trained by identification trainer 15A and performs conversion processing on the coefficient of network B1 to obtain new network B.

Processing executed by processing system 10A configured as explained above is explained.

FIG. 11 is a flowchart illustrating processing (referred to as a processing method as well) executed by processing system 10A in the present embodiment.

Processing included in step S101 to step S107 illustrated in FIG. 11 is the same as the processing of processing system 10 in Embodiment 1 (see FIG. 6).

In step S121, identification trainer 15A updates the coefficient of network B using the error calculated in step S107 such that it is discriminated by discriminator 12 that the identification result by network B is the identification result of network A.

In step S122, converter 16 obtains network B1, the coefficient of which is updated by identification trainer 15A in step S121, and converts the coefficient of network B1 to obtain network B.

In step S123, converter 16 updates network B input to identifier 11 with network B obtained in step S122.

According to the series of processing explained above, processing system 10A trains a discriminating model that can appropriately discriminate whether information inputted is the identification result by network A or the identification result by network B and, then, updates the coefficient of network B1 using the trained discriminating model such that it is discriminated that the identification result by network B is the identification result of network A to thereby train the identifying model using network B1. Further, processing system 10A obtains network B from updated network B1 through conversion processing to update the identifying model using network B. As a result, the identifying model using network B is trained to output the same prediction result as a prediction result of the identifying model using network A. In this way, processing system 10A can reduce, based on the identifying model using network A, a difference in identification results that could occur when the identifying model using network B is obtained.

As explained above, the information processing method in the present embodiment trains the discriminating model that can appropriately discriminate whether the information inputted is the first prediction result or the second prediction result and, then, trains the third prediction model using the trained discriminating model such that it is discriminated that the second prediction result is the first prediction result. The information processing method obtains the second prediction model from the trained third prediction model through conversion processing to update the second prediction model. As a result, the second prediction model is trained to output the same prediction result as a prediction result of the first prediction model. That is, the information processing method can reduce a difference in prediction results that occurs between the first prediction model and the second prediction model. Therefore, the information processing method can reduce a difference in prediction results that occurs between two prediction models. Specifically, the information processing method can reduce a difference in prediction results that could occur when a new second prediction model is obtained based on the first prediction model. In this way, the information processing method can reduce a difference in prediction results that occurs when a new prediction model is obtained based on a prediction model.

Since the trained third prediction model is further trained using new first data to obtain the second prediction model (in other words, the training is recursively repeated), the information processing method can further reduce the difference in prediction results that could occur when a new second prediction model is obtained based on the first prediction model. Accordingly, the information processing method can further reduce the difference in prediction results that occurs between two prediction models.

The information processing method compresses the neural network model, which is the third prediction model, to obtain the second prediction model. Accordingly, the information processing method can reduce, based on the first prediction model, the difference in prediction results that could occur when a compressed new second prediction model is obtained. Accordingly, the information processing method can reduce the difference that occurs between the two prediction models when a compressed new prediction model is obtained based on the prediction model. Therefore, even in an environment in which computing resources such as IoT equipment are limited, the information processing method can apply the second prediction model close to behavior of the first prediction model while maintaining prediction performance.

The information processing method obtains the second prediction model by quantizing the neural network model, which is the third prediction model. Accordingly, the information processing method can compress the neural network model without changing a network structure and suppress fluctuation in prediction performance and a prediction result (behavior) before and after compressing the neural network model.

The information processing method converts the coefficient of the neural network model, which is the third prediction model, from the floating-point format to the fixed-point format to obtain the second prediction model. Accordingly, the information processing method can adapt the second prediction model to a general embedded environment while suppressing fluctuation in prediction performance and a prediction result (behavior).

The information processing method reduces nodes of the neural network model, which is the third prediction model, or reduces connections of the nodes to obtain the second prediction model. Accordingly, since the reduction in the number of nodes and the connections of the nodes is directly connected to a reduction in a computing amount, the information processing method can adapt the second prediction model to an environment in which computing resources are severely restricted.

### [Embodiment 3]

In the present embodiment, about an information processing method and an information processing system for reducing a difference in prediction results that could occur when a new prediction model is obtained based on a prediction model, a configuration different from the configuration in Embodiment 1 is explained. Note that the same constituent elements as the constituent elements in Embodiment 1 are denoted by the same reference numerals and signs and detailed explanation of the constituent elements is omitted.

FIG. 12 is a block diagram illustrating a functional configuration of processing system 10B in the present embodiment. Processing system 10B in the present embodiment is a system for obtaining, referring to the existing prediction model, a new prediction model for outputting the same prediction result as a prediction result of the existing prediction model.

FIG. 12 is a block diagram illustrating a functional configuration of processing system 10B in the present embodiment.

As illustrated in FIG. 12, processing system 10B includes identifier 11B, discriminator 12B, first calculator 13B, discrimination trainer 14B, identification trainer 15B, and second calculator 18. The functional units included in processing system 10B can be realized by a processor (for example, a CPU) (not illustrated) executing a predetermined program using a memory. Note that processing system 10B may be realized as one device or may be realized by a plurality of devices capable of communicating with one another.

Like identifier 11 in Embodiment 1, identifier 11B is a functional unit that identifies input data using an identifying model, which is a prediction model. Identifier 11B outputs identification results (that is, a first prediction result, a second prediction result, and a third prediction result) by networks A and B.

Identifier 11B provides the identification result (that is, the first prediction result) by network A to second calculator 18 and outputs a feature map obtained as the identification result by network A to discriminator 12B.

Like discriminator 12 in Embodiment 1, discriminator 12B inputs the identification result obtained from identifier 11B to a discriminating model and obtains discriminating information about the input identification result. Discriminator 12B obtains a feature map output by identifier 11B and outputs, to second calculator 18, an identification result output by inputting the feature map to the discriminating model.

First calculator 13B is the same functional unit as calculator 13 in Embodiment 1.

Second calculator 18 obtains an identification result by network A from identifier 11B and obtains an identification result of the discriminating model to which the feature map is input. Second calculator 18 calculates a difference (equivalent to a fourth error) between the obtained two identification results.

Like discrimination trainer 14 in Embodiment 1, discrimination trainer 14B is a functional unit that trains the discriminating model with machine learning. Discrimination trainer 14B obtains a first error and a second error calculated by calculator 13 and obtains a third error calculated by second calculator 18. Discrimination trainer 14B trains the discriminating model with machine learning to reduce the first error, the second error, and the third error.

Like identification trainer 15 in Embodiment 1, identification trainer 15B is a functional unit that trains the identifying model with machine learning. Identification trainer 15B obtains the third error calculated by first calculator 13B and obtains the fourth error calculated by second calculator 18. Identification trainer 15B trains the identifying model using network B with machine learning to reduce the third error and the fourth error.

In the following explanation, an overview of update of network B by processing system 10B is explained. The update of network B is performed by repeatedly executing the training of the discriminating model and the training of the identifying model using network B. In the following explanation, (1) the training of the discriminating model and (2) the training of the identifying model using network B are explained.

### (1) Training of the discriminating model

FIG. 13 is an explanatory diagram illustrating the training of the discriminating model in processing system 10B in the present embodiment. FIG. 14 is an explanatory diagram illustrating correct answer information used for the training of the discriminating model in processing system 10B in the present embodiment.

Like identifier 11 in Embodiment 1, when an input image is input, identifier 11B executes identification processing for identifying an image with each of the identifying model using network A and the identifying model using network B and outputs an identification result. Further, identifier 11B presents, to discriminator 12B, a feature map obtained as a result of identifying input data using network A.

Like discriminator 12 in Embodiment 1, discriminator 12B discriminates, with the discriminating model using network D, whether an identification result provided from identifier 11B is an identification result of identification by the identifying model using network A or an identification result of identification by the identifying model using network B and provides discriminating information indicating a result of the discrimination to first calculator 13B. Further, discriminator 12B provides, to second calculator 18, an identification result obtained by inputting the feature map provided from identifier 11B to the discriminating model. The identification result is information indicating a result of identifying the input feature map and includes, for example, an object or a situation imaged in image data, which is input data, based on which the feature map is generated, or information indicating an attribute of the object or the situation.

Like calculator 13 in Embodiment 1, first calculator 13B calculates a difference (the first error and the second error) between the discriminating information output by discriminator 12 and correct answer information.

Second calculator 18 obtains an identification result by network A from identifier 11B and obtains an identification result by a discriminating model for the feature map from discriminator 12B. Second calculator 18 calculates an error (equivalent to the fourth error) between the obtained two identification results. When the identification result by network A is information "dog: 90%, cat: 10%" and the identification result by the discriminating model is information "dog: 80%, cat: 20%", an error calculated from 0.01, which is a square of (0.9-0.8), is obtained. The identification result by network A is treated as correct answer information for training the discriminating model (see FIG. 14).

Discrimination trainer 14B is a functional unit that trains the discriminating model with machine learning. Discrimination trainer 14B adjusts the coefficient included in network D to reduce the errors (the first error, the second error, and the fourth error) calculated by first calculator 13B and second calculator 18. At this time, discrimination trainer 14B refers to the loss function and adjusts the coefficient to reduce the errors through the adjustment of the coefficient. In this way, discrimination trainer 14B updates the coefficient of network D by adjusting the coefficient to thereby train the discriminating model.

### (2) Training of the identifying model using network B

FIG. 15 is an explanatory diagram illustrating training of the identifying model in processing system 10B in the present embodiment. FIG. 16 is an explanatory diagram illustrating correct answer information used for training of the identifying model in processing system 10B in the present embodiment.

When an input image is input, identifier 11B executes identification processing for identifying an image with the identifying model using network B and outputs an identification result. The identification result is, for example, information "dog: 80%, cat: 20%". The identification result output by identifier 11B is provided to discriminator 12B.

Like identifier 11 in Embodiment 1, discriminator 12B discriminates, with the discriminating model using network D, whether the identification result provided from identifier 11B is an identification result of identification by the identifying model using network A or an identification result of identification by the identifying model using network B. Discriminator 12B provides, to second calculator 18, an identification result obtained by inputting the feature map provided from identifier 11B to the discriminating model.

First calculator 13B calculates a difference (a third error) between the discriminating information output by discriminator 12 and correct answer information.

Second calculator 18 obtains the identification result by network A from identifier 11B and obtains, from discriminator 12B, the identification result by the discriminating model to which the feature map is input. Second calculator 18 calculates an error (equivalent to the fourth error) between the obtained two identification results. When the identification result by network A is information "dog: 90%, cat: 10%" and the identification result by discriminating model is information "dog: 80%, cat: 20%", an error calculated from 0.01, which is a square of (0.9-0.8), is obtained. The identification result by network A is treated as correct answer information for training network B (see FIG. 16).

Identification trainer 15B adjusts the coefficient included in network B to reduce the errors (the third error and the fourth error) calculated by first calculator 13B and second calculator 18. At this time, identification trainer 15B does not change and fixes the coefficient included in network D.

When adjusting the coefficient included in network B, identification trainer 15B refers to the loss function and adjusts the coefficient to reduce the errors through the adjustment of the coefficient. In this way, identification trainer 15B adjusts the coefficient of network B to thereby update network B.

Processing executed by processing system 10B configured as explained above is explained.

FIG. 17 is a flowchart illustrating processing executed by processing system 10B in the present embodiment.

Processing included in step S101 to step S104 illustrated in FIG. 17 is the same as the processing of processing system 10 in Embodiment 1 (see FIG. 6).

In step S141, identifier 11B obtains the feature map serving as the identification result by network A.

In step S142, discriminator 12B inputs the feature map to the discriminating model and obtains an identification result of the feature map using the discriminating model.

In step S143, second calculator 18 calculates an error between the identification result by network A and the identification result of the feature map.

In step S105A, discrimination trainer 14B updates a coefficient of a network of the discriminating model such that it is possible to correctly discriminate whether the information inputted is the identification result by network A or the identification result by network B and the discriminating model performs the same identification as in network A.

Processing included in step S106 and step S107 is the same as the processing of processing system 10 in Embodiment 1 (see FIG. 6).

In step S151, identifier 11B obtains the feature map serving as the identification result by network A.

In step S152, discriminator 12B inputs the feature map to the discriminating model and obtains an identification result of the feature map using the discriminating model.

In step S153, second calculator 18 calculates an error between the identification result by network A and the identification result of the feature map.

In step S108A, identification trainer 15B updates the coefficient of network B such that it is discriminated that the identification result by network B is the identification result of network A and the discriminating model performs the same discrimination as network A.

Note that processing system 10B in the present embodiment may further include converter 16 in Embodiment 2.

As explained above, the information processing method in the present embodiment trains the discriminating model further using the difference between the first prediction result and the prediction result (the fourth prediction result) by the discriminating model for the feature value obtained from the first prediction model. Consequently, the information processing method can reduce the difference between the prediction result of the discriminating model and the prediction result of the first prediction model to thereby further reduce the difference in prediction results that could occur when a new second prediction model is obtained based on the first prediction model. Accordingly, the information processing method can further reduce the difference in prediction results that occurs between two prediction models.

Note that, in the training of the identifying model using network B in Embodiment 3, the identifying model using network A is used. However, a form of the training is not limited to this. For example, the identifying model using network B may be trained without the identifying model using network A. In this case, the configuration of the processing is substantially the same as the training of the identifying model using network B in Embodiment 2. Note that the discriminating model is trained using the identification result of the identifying model using network A.

### [Embodiment 4]

In the present embodiment, about an information processing method and an information processing system for reducing a difference in prediction results that could occur when a new prediction model is obtained based on a prediction model, a configuration different from the configuration in Embodiments 1 to 3 is explained. Note that the same constituent elements as the constituent elements in Embodiments 1 to 3 are denoted by the same reference numerals and signs and detailed explanation of the constituent elements is omitted.

FIGS. 18 and 19 are block diagrams illustrating a functional configuration of processing system 10C in the present embodiment. Processing system 10C includes noise adder 19 in addition to identifier 11, discriminator 12, calculator 13, discrimination trainer 14, and identification trainer 15.

Noise adder 19 adds noise to a prediction result. For example, as illustrated in FIG. 18, noise adder 19 adds noise to the identification result of the identifying model using network A and the identification result of the identifying model using network B. For example, when processing for compressing the network is processing for quantizing the network, the noise may be Gaussian noise. For example, when the processing for compressing network B is processing for reducing nodes or reducing connection of the nodes, the noise may be noise generated by reviving a part of weight connected to the deleted node or weight concerning the deleted connection. Note that a type of the noise is not limited to this. The identification result to which the noise is added is input to discriminator 12.

Note that noise adder 19 may add noise only to the second prediction result. For example, as illustrated in FIG. 19, noise adder 19 adds noise to the identification result of the identifying model using network B. The identification result to which the noise is added is input to discriminator 12. In this case, the first prediction result, that is, the identification result of the identifying model using network A is directly input to discriminator 12 without noise being added thereto.

Subsequently, a method of adding noise when a prediction result is a feature value (a feature map) is explained with reference to FIG. 20. FIG. 20 is a schematic diagram for explaining a method of adding noise added by noise adder 19 in the present embodiment.

Noise adder 19 adds noise to the entire prediction result. For example, as illustrated in P1 of FIG. 20, noise is added to all element components and channel components of the prediction result. In FIG. 20, an element component is indicated by an element E, a height component and a width component of an element are indicated by height H and width W, and a channel component is indicated by a channel C.

Note that noise adder 19 may add noise to a part of the prediction result. Specifically, noise adder 19 may add noise to a part of the prediction result having a predetermined element component. For example, as illustrated in P2 of FIG. 20, noise is added to a part of the prediction result corresponding to the predetermined element component of the prediction result. Note that the predetermined element component may be determined at random.

Noise adder 19 may add noise to a part of the prediction result having a predetermined channel component. For example, as illustrated in P3 of FIG. 20, noise is added to a part of the prediction result corresponding to the predetermined channel component of the prediction result. Note that the predetermined channel component may be determined at random.

Processing executed by processing system 10C configured as explained above is explained.

FIG. 21 is a flowchart illustrating processing executed by processing system 10C in the present embodiment.

Processing in step S101 to step S108 illustrated in FIG. 21 is the same as the processing of processing system 10 in Embodiment 1 (see FIG. 6). Steps S161 and S162 are added anew between steps S102 and S103.

In step S161, noise adder 19 adds noise to an identification result of the identifying model using network A.

In step S162, noise adder 19 adds noise to an identification result of the identifying model using network B.

Note that, when noise is added to only the identification result of the identifying model using network B, as illustrated in FIG. 22, step S161 may be omitted.

As described above, the information processing method in the present embodiment includes adding noise to the second prediction result, and the obtaining of the second discriminating information includes obtaining the second discriminating information by inputting, to the discriminating model, the second prediction result to which the noise has been added. Consequently, the information processing method can inhibit the discriminating model from being able to easily distinguish the first prediction result and the second prediction result. When training of the discriminating model advances, it becomes easy to distinguish the first prediction result and the second prediction result. The training of the second prediction model using the discriminating information sometimes stagnates. However, according to the present embodiment, since noise is added to at least the second prediction result, the discrimination by the discriminating model becomes difficult. As a result, it is possible to inhibit the training of the second prediction model from stagnating.

### [Embodiment 5]

In the present embodiment, about an information processing method and an information processing system for reducing a difference in prediction results that could occur when a new prediction model is obtained based on a prediction model, a configuration different from the configuration in Embodiments 1 to 4 is explained. Note that the same constituent elements as the constituent elements in Embodiments 1 to 4 are denoted by the same reference numerals and signs and detailed explanation of the constituent elements is omitted.

FIG. 23 is a block diagram illustrating a functional configuration of processing system 10D in the present embodiment. Processing system 10D includes noise adder 19D in addition to identifier 11, discriminator 12, calculator 13, discrimination trainer 14, identification trainer 15A, and converter 16.

Noise adder 19D adds noise to the second prediction result. Noise adder 19D determines, based on a discrete width of the second prediction result, noise to be added. Specifically, noise adder 19D determines amplitude of a distribution of Gaussian noise based on a standard deviation and a discrete width of the Gaussian noise. For example, noise adder 19D determines the amplitude of the distribution of the Gaussian noise such that width of a value equivalent to a double of the standard deviation of the Gaussian noise is equal to or larger than the discrete width of the second prediction result. Details are explained with reference to FIG. 24. FIG. 24 is a schematic diagram for explaining noise added by noise adder 19D in the present embodiment.

FIG. 24 illustrates values of the second prediction result and distributions of the Gaussian noise for the respective values. In FIG. 24, the horizontal axis indicates a value of the second prediction result and the vertical axis indicates the number of values (in other words, an appearance frequency of the value). The distance between values is a discrete width Δ. The amplitude of the distribution of the Gaussian noise is, for example, 2σ. When the width of the value equivalent to the amplitude is represented by amplitude, noise adder 19D determines the Gaussian noise such that, for example, 2σ≥Δ. Note that the amplitude described above is an example and is not limited to this value if it is possible to make it difficult for the discriminating model to discriminate the first prediction result and the second prediction result.

Further, a method of determining the amplitude of the distribution of the Gaussian noise when the prediction result is a feature value (a feature map) is explained with reference to FIG. 25. FIG. 25 is a schematic diagram for explaining a method of adding noise added by noise adder 19D in the present embodiment.

Noise adder 19D determines amplitude for the entire prediction result. For example, amplitude is uniquely determined for all element components and channel components of the prediction result. Noise is added as illustrated in P4 of FIG. 25 using the determined amplitude. In FIG. 25, as in FIG. 20, an element component is indicated by the element E, a height component and a width component of an element are indicated by the height H and the width W, and a channel component is indicated by the channel C.

Note that noise adder 19D may determine amplitude for each part of the prediction result. Specifically, noise adder 19D may determine amplitude for each predetermined range of the element component of the prediction result. For example, as illustrated in P5 of FIG. 25, Gaussian noise having a different distribution is added for each predetermined range of the element component of the prediction result using the amplitude determined for each predetermined range of the element component.

Noise adder 19D may determine amplitude for each predetermined range of the channel component of the prediction result. For example, as illustrated in P6 of FIG. 25, Gaussian noise having a different distribution is added for each predetermined range of the channel component of the prediction result using the amplitude determined for each predetermined range of the channel component.

The noise determined based on the discrete width may be noise different from the Gaussian noise. Specifically, the noise may be noise generated by reviving a part of weight connected to the deleted node or weight concerning the deleted connection.

Note that noise adder 19D may add noise to the first prediction result using the method explained above if the discrete width of the first prediction result can be obtained. As the noise added to the first prediction result, noise determined irrespective of the discrete width (for example, Gaussian noise having preset amplitude) may be added.

A range in which the noise is added may be the entire prediction result as in Embodiment 4 or may be a part of the prediction result having the predetermined element component or may be a part of the prediction result having the predetermined channel component.

Further, noise adder 19D determines a discrete width based on a conversion setting in conversion processing of converter 16. Specifically, noise adder 19D determines the discrete width based on a setting for compressing the network in the processing for compressing network B. For example, in the case of the processing for quantizing network B, the discrete width is determined based on the number of bits after the quantization. In the case of the processing for reducing nodes or reducing connection of the nodes, the discrete width is determined based on which node in the identifying model is reduced.

Processing executed by processing system 10D configured as explained above is explained.

FIG. 26 is a flowchart illustrating processing executed by processing system 10D in the present embodiment.

Processing in step S101 to step S107 and steps S121 to S123 illustrated in FIG. 26 is the same as the processing of processing system 10A in Embodiment 2 (see FIG. 11). Step S171 is added anew between steps S102 and S103. Step S172 is added anew between steps S121 and S122.

In step S171, noise adder 19D adds noise having determined amplitude to the identification result of the identifying model using network B. When processing for determining amplitude explained below is not executed yet, noise having initially set amplitude is added.

Note that noise may be added to the identification result of the identifying model using network A as in step S161 of the flowchart of FIG. 18.

In step S172, noise adder 19D determines a discrete width of coefficient conversion and amplitude of noise. Specifically, noise adder 19D determines the discrete width based on the conversion setting of converter 16. Noise adder 19D determines the amplitude of the noise based on the determined discrete width. In this way, the amplitude of the noise determined in step S172 is used as the amplitude of the noise added in step S171.

As explained above, in the information processing method in the present embodiment, the discrete width of the prediction result is determined based on the conversion setting in the conversion processing. Consequently, since a discrete width is determined considering content of conversion and noise is determined based on the discrete width, it is possible to add suitable noise to a prediction result output by a prediction model after conversion. Therefore, it is possible to effectively suppress influence on the discrimination processing of the discriminating model due to discretization of a prediction result caused by the conversion of the prediction model.

Note that the discrete width may be estimated from the prediction result. For example, noise adder 19D analyzes a distribution of data in the second prediction result and estimates a discrete width based on the distribution. In this case, it is possible to determine noise based on the discrete width of the prediction result even if the conversion setting cannot be acquired.

Each of the constituent elements in the above embodiments may be configured in the form of an exclusive hardware product, or may be implemented by executing a software program suitable for the constituent element. Each of the constituent elements may be implemented by means of a program executing unit, such as a CPU or a processor, reading and executing a software program recorded on a recording medium such as hard disk or semiconductor memory. Here, the software program for implementing an information processing device and so on in the above embodiments and variations is a program described below.

That is, the program is a program that causes a computer to execute an information processing method performed by a processor using memory, the information processing method including: obtaining a first prediction result by inputting first data to a first prediction model; obtaining a second prediction result by inputting the first data to a second prediction model; obtaining first discriminating information by inputting the first prediction result to a discriminating model that outputs discriminating information indicating whether information inputted is an output of the first prediction model or an output of the second prediction model, the first discriminating information being the discriminating information on the first prediction result inputted; obtaining a first error indicating a difference between the first discriminating information and correct answer information indicating that information inputted is an output of the first prediction model; obtaining second discriminating information by inputting the second prediction result to the discriminating model, the second discriminating information being the discriminating information on the second prediction result inputted; obtaining a second error indicating a difference between the second discriminating information and correct answer information indicating that information inputted is an output of the second prediction model; training the discriminating model by machine learning to reduce the first error and the second error; obtaining a third prediction result by inputting second data to the second prediction model; obtaining third discriminating information by inputting the third prediction result to the discriminating model trained, the third discriminating information being the discriminating information on the third prediction result inputted; obtaining a third error indicating a difference between the third discriminating information and correct answer information indicating that information inputted is an output of the first prediction model; and training the second prediction model by machine learning to reduce the third error.

Furthermore, the program is a program that causes a computer to execute an information processing method performed by a processor using memory, the information processing method including: obtaining a first prediction result by inputting first data to a first prediction model; obtaining a second prediction result by inputting the first data to a second prediction model; obtaining first discriminating information by inputting the first prediction result to a discriminating model that outputs discriminating information indicating whether information inputted is an output of the first prediction model or an output of the second prediction model, the first discriminating information being the discriminating information on the first prediction result inputted; obtaining a first error indicating a difference between the first discriminating information and correct answer information indicating that information inputted is an output of the first prediction model; obtaining second discriminating information by inputting the second prediction result to the discriminating model, the second discriminating information being the discriminating information on the second prediction result inputted; obtaining a second error indicating a difference between the second discriminating information and correct answer information indicating that information inputted is an output of the second prediction model; training the discriminating model by machine learning to reduce the first error and the second error; obtaining a third prediction result by inputting second data to the second prediction model; obtaining third discriminating information by inputting the third prediction result to the discriminating model trained, the third discriminating information being the discriminating information on the third prediction result inputted; obtaining a third error indicating a difference between the third discriminating information and correct answer information indicating that information inputted is an output of the first prediction model; training a third prediction model by machine learning to reduce the third error; and updating the second prediction model through conversion processing of converting the third prediction model trained.

### [Industrial Applicability]

The present invention is applicable to a system that generates a new prediction model based on an existing prediction model.

### [Reference Signs List]

10, 10A, 10B, 10C, 10D processing system
11, 11B identifier
12, 12B discriminator
13 calculator
13B first calculator
14, 14B discrimination trainer
15, 15A, 15B identification trainer
16 converter
18 second calculator
19, 19D noise adder
20 prediction system
21 obtainer
22 predictor
A, B, B1, D network

## Claims

1. An information processing method performed by a processor using memory to identify images contained within image data, the information processing method comprising:
obtaining a first prediction result by inputting first image data to a first prediction model (S101);
obtaining a second prediction result by inputting the first image data to a second prediction model (S102);
obtaining first discriminating information by inputting the first prediction result to a discriminating model that outputs discriminating information indicating whether information inputted is an output of the first prediction model or an output of the second prediction model, the first discriminating information being the discriminating information on the first prediction result inputted;
obtaining a first error indicating a difference between the first discriminating information and correct answer information indicating that information inputted is an output of the first prediction model (S103);
obtaining second discriminating information by inputting the second prediction result to the discriminating model, the second discriminating information being the discriminating information on the second prediction result inputted;
obtaining a second error indicating a difference between the second discriminating information and correct answer information indicating that information inputted is an output of the second prediction model (S104);
training the discriminating model by machine learning to reduce the first error and the second error (S105);
obtaining a third prediction result by inputting second image data to the second prediction model (S106);
obtaining third discriminating information by inputting the third prediction result to the discriminating model trained, the third discriminating information being the discriminating information on the third prediction result inputted;
obtaining a third error indicating a difference between the third discriminating information and correct answer information indicating that information inputted is an output of the first prediction model (S107);
training a third prediction model by machine learning to reduce the third error, while a coefficient included in the discriminating model is fixed without being changed; and
updating the second prediction model through conversion processing of converting the third prediction model trained (S122, S123),
wherein
the first prediction model, the second prediction model, and the third prediction model are each a neural network model, and
the conversion processing includes processing of compressing the third neural network model.

2. The information processing method according to claim 1, further comprising:
obtaining an other third prediction result by inputting an other item of the second image data to the second prediction model updated;
further training the third prediction model by machine learning based on the other third prediction result obtained; and
further updating the second prediction model through the conversion processing on the third prediction model further trained.

3. The information processing method according to claim 1, wherein
the processing of compressing the neural network model includes processing of quantizing the neural network model.

4. The information processing method according to claim 3, wherein
the processing of quantizing the neural network model includes processing of converting a coefficient of the neural network model from a floating-point format to a fixed-point format.

5. The information processing method according to any one of claims 1, 3 and 4, wherein
the processing of compressing the neural network model includes one of: processing of reducing nodes of the neural network model; and processing of reducing connections of nodes of the neural network model.

6. The information processing method according to any one of claims 1 to 5, further comprising:
obtaining a fourth prediction result by inputting a feature amount to the discriminating model, the feature amount being obtained by inputting the first data to the first prediction model, wherein
the training of the discriminating model includes training the discriminating model by machine learning by further using a fourth error that indicates a difference between the first prediction result and the fourth prediction result.

7. The information processing method according to any one of claims 1 to 6, further comprising:
adding noise to the second prediction result, wherein
the obtaining of the second discriminating information includes obtaining the second discriminating information by inputting, to the discriminating model, the second prediction result to which the noise has been added.

8. The information processing method according to claim 7, wherein
the noise is determined based on a discrete width of the second prediction result.

9. The information processing method according to claim 8, wherein
the noise includes Gaussian noise, and
an amplitude of distribution of the Gaussian noise is determined based on a standard deviation of the Gaussian noise and the discrete width of the second prediction result.

10. The information processing method according to claim 9, wherein
the amplitude of the distribution of the Gaussian noise is determined for each predetermined range of an element component of the second prediction result.

11. The information processing method according to claim 9 or 10, wherein
the amplitude of the distribution of the Gaussian noise is determined for each predetermined range of a channel component of the second prediction result.

12. The information processing method according to any one of claims 7 to 11, wherein
the noise is added to a portion of the second prediction result, the portion having a predetermined element component.

13. The information processing method according to any one of claims 7 to 12, wherein
the noise is added to a portion of the second prediction result, the portion having a predetermined channel component.

14. The information processing method according to any one of claims 1 and 3 to 7, further comprising:
adding noise to the second prediction result, wherein
the obtaining of the second discriminating information includes obtaining the second discriminating information by inputting, to the discriminating model, the second prediction result to which the noise has been added,
the noise includes Gaussian noise,
the Gaussian noise is determined based on a discrete width of the second prediction result, and
the discrete width is determined based on a conversion setting of the conversion processing.

15. An information processing system to identify images contained within image data comprising:
an obtainer that obtains third image data; and
a predictor that obtains a second prediction result by inputting the third data obtained by the obtainer to a second prediction model, and outputs the second prediction result, wherein
the second prediction model is obtained by:
obtaining a first prediction result by inputting first image data to a first prediction model;
obtaining a second prediction result by inputting the first image data to the second prediction model;
obtaining first discriminating information by inputting the first prediction result to a discriminating model that outputs discriminating information indicating whether information inputted is an output of the first prediction model or an output of the second prediction model, the first discriminating information being the discriminating information on the first prediction result inputted;
obtaining a first error indicating a difference between the first discriminating information and correct answer information indicating that information inputted is an output of the first prediction model;
obtaining second discriminating information by inputting the second prediction result to the discriminating model, the second discriminating information being the discriminating information on the second prediction result inputted;
obtaining a second error indicating a difference between the second discriminating information and correct answer information indicating that information inputted is an output of the second prediction model;
training the discriminating model by machine learning to reduce the first error and the second error;
obtaining a third prediction result by inputting second data to the second prediction model;
obtaining third discriminating information by inputting the third prediction result to the discriminating model trained, the third discriminating information being the discriminating information on the third prediction result inputted;
obtaining a third error indicating a difference between the third discriminating information and correct answer information indicating that information inputted is an output of the first prediction model;
training a third prediction model by machine learning to reduce the third error, while a coefficient included in the discriminating model is fixed without being changed; and
updating the second prediction model through conversion processing of converting the third prediction model trained,
wherein
the first prediction model, the second prediction model, and the third prediction model are each a neural network model, and
the conversion processing includes processing of compressing the neural network model.

## Patentansprüche

1. Informationsverarbeitungsverfahren, das von einem Prozessor unter Verwendung von Speicher durchgeführt wird, um Bilder zu identifizieren, die innerhalb von Bilddaten enthalten sind, wobei das Informationsverarbeitungsverfahren umfasst:
Erhalten eines ersten Vorhersageergebnisses durch Eingeben erster Bilddaten in ein erstes Vorhersagemodell (S101);
Erhalten eines zweiten Vorhersageergebnisses durch Eingeben der ersten Bilddaten in ein zweites Vorhersagemodell (S102);
Erhalten erster Unterscheidungsinformationen durch Eingeben des ersten Vorhersageergebnisses in ein Unterscheidungsmodell, das Unterscheidungsinformationen ausgibt, die angeben, ob Informationen, die eingegeben werden, eine Ausgabe des ersten Vorhersagemodells oder eine Ausgabe des zweiten Vorhersagemodells sind, wobei die ersten Unterscheidungsinformationen die Unterscheidungsinformationen über das erste eingegebene Vorhersageergebnis sind;
Erhalten eines ersten Fehlers, der eine Differenz zwischen den ersten Unterscheidungsinformationen und korrekten Antwortinformationen angibt, die angeben, dass eingebebene Informationen eine Ausgabe des ersten Vorhersagemodells sind (S103);
Erhalten zweiter Unterscheidungsinformationen durch Eingeben des zweiten Vorhersageergebnisses in das Unterscheidungsmodell, wobei die zweiten Unterscheidungsinformationen die Unterscheidungsinformationen über das zweite eingegebene Vorhersageergebnis sind;
Erhalten eines zweiten Fehlers, der eine Differenz zwischen den zweiten Unterscheidungsinformationen und korrekten Antwortinformationen angibt, die angeben, dass eingegebene Informationen eine Ausgabe des zweiten Vorhersagemodells sind (S104);
Trainieren des Unterscheidungsmodells durch maschinelles Lernen, um den ersten Fehler und den zweiten Fehler zu vermindern (S105);
Erhalten eines dritten Vorhersageergebnisses durch Eingeben zweiter Bilddaten in das zweite Vorhersagemodell (S106);
Erhalten dritter Unterscheidungsinformationen durch Eingeben des dritten Vorhersageergebnisses in das trainierte Unterscheidungsmodell, wobei die dritten Unterscheidungsinformationen die Unterscheidungsinformationen über das dritte eingegebene Vorhersageergebnis sind;
Erhalten eines dritten Fehlers, der eine Differenz zwischen den dritten Unterscheidungsinformationen und korrekten Antwortinformationen ist, die angeben, dass eingegebene Informationen eine Ausgabe des ersten Vorhersagemodells sind (S107);
Trainieren eines dritten Vorhersagemodells durch maschinelles Lernen, um den dritten Fehler zu vermindern, während ein Koeffizient, der in dem Unterscheidungsmodell enthalten ist, fest ist, ohne geändert zu werden; und
Aktualisieren des zweiten Vorhersagemodells durch Konvertierungsverarbeitung zum Konvertieren des dritten trainierten Vorhersagemodells (S122, S123),
wobei
das erste Vorhersagemodell, das zweite Vorhersagemodell und das dritte Vorhersagemodell jeweils ein neuronales Netzmodell sind, und
die Konvertierungsverarbeitung das Verarbeiten zum Komprimieren des dritten neuronalen Netzmodells umfasst.

2. Informationsverarbeitungsverfahren nach Anspruch 1, ferner umfassend:
Erhalten eines anderen dritten Vorhersageergebnisses durch Eingeben eines anderen Elements der zweiten Bilddaten in das aktualisierte zweite Vorhersagemodell;
Weitertrainieren des dritten Vorhersagemodells durch maschinelles Lernen basierend auf dem anderen erhaltenen dritten Vorhersageergebnis; und
Weiteraktualisieren des zweiten Vorhersagemodells durch die Konvertierungsverarbeitung auf dem weitertrainierten dritten Vorhersagemodell.

3. Informationsverarbeitungsverfahren nach Anspruch 1, wobei
das Verarbeiten zum Komprimieren des neuronalen Netzmodells das Verarbeiten zum Quantisieren des neuronalen Netzmodells umfasst.

4. Informationsverarbeitungsverfahren nach Anspruch 3, wobei
das Verarbeiten zum Quantisieren des neuronalen Netzmodells das Verarbeiten zum Konvertieren eines Koeffizienten des neuronalen Netzmodells von einem Gleitkommaformat zu einem Festkommaformat umfasst.

5. Informationsverarbeitungsverfahren nach einem der Ansprüche 1, 3 und 4, wobei
das Verarbeiten zum Komprimieren des neuronalen Netzmodells eines von Folgendem umfasst: Verarbeiten zum Reduzieren von Knoten des neuronalen Netzmodells; und Verarbeiten zum Reduzieren von Verbindungen von Knoten des neuronalen Netzmodells.

6. Informationsverarbeitungsverfahren nach einem der Ansprüche 1 bis 5, ferner umfassend:
Erhalten eines vierten Vorhersageergebnisses durch Eingeben einer Merkmalsgröße in das Unterscheidungsmodell, wobei die Merkmalsgröße durch Eingeben der ersten Daten in das erste Vorhersagemodell erhalten wird, wobei
das Trainieren des Unterscheidungsmodells das Trainieren des Unterscheidungsmodells durch maschinelles Lernen unter weiterer Verwendung eines vierten Fehlers umfasst, der eine Differenz zwischen dem ersten Vorhersageergebnis und dem vierten Vorhersageergebnis angibt.

7. Informationsverarbeitungsverfahren nach einem der Ansprüche 1 bis 6, ferner umfassend:
Hinzufügen von Rauschen zu dem zweiten Vorhersageergebnis, wobei
das Erhalten der zweiten Unterscheidungsinformationen das Erhalten der zweiten Unterscheidungsinformationen durch Eingeben des zweiten Vorhersageergebnisses, zu dem das Rauschen hinzugefügt wurde, zu dem Unterscheidungsmodell umfasst.

8. Informationsverarbeitungsverfahren nach Anspruch 7, wobei
das Rauschen basierend auf einer diskreten Breite des zweiten Vorhersageergebnisses bestimmt wird.

9. Informationsverarbeitungsverfahren nach Anspruch 8, wobei
das Rauschen gaußsches Rauschen umfasst, und
eine Verteilungsamplitude des gaußschen Rauschens basierend auf einer Standardabweichung des gaußschen Rauschens und der diskreten Breite des zweiten Vorhersageergebnisses bestimmt wird.

10. Informationsverarbeitungsverfahren nach Anspruch 9, wobei
die Amplitude der Verteilung des gaußschen Rauschens für jeden vorbestimmten Bereich einer Elementkomponente des zweiten Vorhersageergebnisses bestimmt wird.

11. Informationsverarbeitungsverfahren nach Anspruch 9 oder 10, wobei
die Amplitude der Verteilung des gaußschen Rauschens für jeden vorbestimmten Bereich einer Kanalkomponente des zweiten Vorhersageergebnisses bestimmt wird.

12. Informationsverarbeitungsverfahren nach einem der Ansprüche 7 bis 11, wobei
das Rauschen zu einem Abschnitt des zweiten Vorhersageergebnisses hinzugefügt wird, wobei der Abschnitt eine vorbestimmte Elementkomponente aufweist.

13. Informationsverarbeitungsverfahren nach einem der Ansprüche 7 bis 12, wobei
das Rauschen zu einem Abschnitt des zweiten Vorhersageergebnisses hinzugefügt wird, wobei der Abschnitt eine vorbestimmte Kanalkomponente aufweist.

14. Informationsverarbeitungsverfahren nach einem der Ansprüche 1 und 3 bis 7, ferner umfassend:
Hinzufügen von Rauschen zu dem zweiten Vorhersageergebnis, wobei
das Erhalten der zweiten Unterscheidungsinformationen das Erhalten der zweiten Unterscheidungsinformationen durch Eingeben des zweiten Vorhersageergebnisses, zu dem das Rauschen hinzugefügt wurde, zu dem Unterscheidungsmodell umfasst,
das Rauschen gaußsches Rauschen umfasst,
das gaußsche Rauschen basierend auf einer diskreten Breite des zweiten Vorhersageergebnisses bestimmt wird, und
die diskrete Breite basierend auf einer Konvertierungseinstellung der Konvertierungsverarbeitung bestimmt wird.

15. Informationsverarbeitungssystem zum Identifizieren von Bildern, die innerhalb von Bilddaten enthalten sind, umfassend:
eine Erhalteeinrichtung, die dritte Bilddaten erhält; und
eine Vorhersageeinrichtung, die ein zweites Vorhersageergebnis durch Eingeben der dritten Daten, die von der Erhalteeinrichtung erhalten werden, in ein zweites Vorhersagemodell erhält und das zweite Vorhersageergebnis ausgibt, wobei
das zweite Vorhersagemodell erhalten wird durch:
Erhalten eines ersten Vorhersageergebnisses durch Eingeben erster Bilddaten in ein erstes Vorhersagemodell;
Erhalten eines zweiten Vorhersageergebnisses durch Eingeben der ersten Bilddaten in das zweite Vorhersagemodell;
Erhalten erster Unterscheidungsinformationen durch Eingeben des ersten Vorhersageergebnisses in ein Unterscheidungsmodell, das Unterscheidungsinformationen ausgibt, die angeben, ob Informationen, die eingegeben werden, eine Ausgabe des ersten Vorhersagemodells oder eine Ausgabe des zweiten Vorhersagemodells sind, wobei die ersten Unterscheidungsinformationen die Unterscheidungsinformationen über das erste eingegebene Vorhersageergebnis sind;
Erhalten eines ersten Fehlers, der eine Differenz zwischen den ersten Unterscheidungsinformationen und korrekten Antwortinformationen angibt, die angeben, dass eingegebene Informationen eine Ausgabe des ersten Vorhersagemodells sind;
Erhalten zweiter Unterscheidungsinformationen durch Eingeben des zweiten Vorhersageergebnisses in das Unterscheidungsmodell, wobei die zweiten Unterscheidungsinformationen die Unterscheidungsinformationen über das zweite eingegebene Vorhersageergebnis sind;
Erhalten eines zweiten Fehlers, der eine Differenz zwischen den zweiten Unterscheidungsinformationen und korrekten Antwortinformationen angibt, die angeben, dass eingegebene Informationen eine Ausgabe des zweiten Vorhersagemodells sind;
Trainieren des Unterscheidungsmodells durch maschinelles Lernen zum Vermindern des ersten Fehlers und des zweiten Fehlers;
Erhalten eines dritten Vorhersageergebnisses durch Eingeben zweiter Daten in das zweite Vorhersagemodell;
Erhalten dritter Unterscheidungsinformationen durch Eingeben des dritten Vorhersageergebnisses in das trainierte Unterscheidungsmodell, wobei die dritten Unterscheidungsinformationen die Unterscheidungsinformationen über das dritte eingegebene Vorhersageergebnis sind;
Erhalten eines dritten Fehlers, der eine Differenz zwischen den dritten Unterscheidungsinformationen und korrekten Antwortinformationen angibt, die angeben, dass eingegebene Informationen eine Ausgabe des ersten Vorhersagemodells sind;
Trainieren eines dritten Vorhersagemodells durch maschinelles Lernen, um den dritten Fehler zu vermindern, während ein Koeffizient, der in dem Unterscheidungsmodell enthalten ist, fest ist, ohne geändert zu werden; und
Aktualisieren des zweiten Vorhersagemodells durch Konvertierungsverarbeitung zum Konvertieren des dritten trainierten Vorhersagemodells,
wobei
das erste Vorhersagemodell, das zweite Vorhersagemodell und das dritte Vorhersagemodell jeweils ein neuronales Netzmodell sind, und
die Konvertierungsverarbeitung das Verarbeiten zum Komprimieren des neuronalen Netzmodells umfasst.

## Revendications

1. Procédé de traitement d'informations réalisé par un processeur utilisant une mémoire pour identifier des images contenues dans des données d'image, le procédé de traitement d'informations comprenant :
l'obtention d'un premier résultat de prédiction en entrant des premières données d'image dans un premier modèle de prédiction (S101) ;
l'obtention d'un deuxième résultat de prédiction en entrant les premières données d'image dans un deuxième modèle de prédiction (S102) ;
l'obtention de premières informations de discrimination en entrant le premier résultat de prédiction dans un modèle de discrimination qui délivre des informations de discrimination indiquant si les informations entrées sont une sortie du premier modèle de prédiction ou une sortie du deuxième modèle de prédiction, les premières informations de discrimination étant les informations de discrimination sur le premier résultat de prédiction entré ;
l'obtention d'une première erreur indiquant une différence entre les premières informations de discrimination et des informations de réponse correctes indiquant que les informations entrées sont une sortie du premier modèle de prédiction (S103) ;
l'obtention de deuxièmes informations de discrimination en entrant le deuxième résultat de prédiction dans le modèle de discrimination, les deuxièmes informations de discrimination étant les informations de discrimination sur le deuxième résultat de prédiction entré ;
l'obtention d'une deuxième erreur indiquant une différence entre les deuxièmes informations de discrimination et des informations de réponse correctes indiquant que les informations entrées sont une sortie du deuxième modèle de prédiction (S104) ;
l'entraînement du modèle de discrimination par apprentissage machine pour réduire la première erreur et la deuxième erreur (S105) ;
l'obtention d'un troisième résultat de prédiction en entrant des deuxièmes données d'image dans le deuxième modèle de prédiction (S106) ;
l'obtention des troisièmes informations de discrimination en entrant le troisième résultat de prédiction dans le modèle de discrimination entraîné, les troisièmes informations de discrimination étant les informations de discrimination sur le troisième résultat de prédiction entré ;
l'obtention d'une troisième erreur indiquant une différence entre les troisièmes informations de discrimination et des informations de réponse correctes indiquant que les informations entrées sont une sortie du premier modèle de prédiction (S107) ;
l'entraînement d'un troisième modèle de prédiction par apprentissage machine pour réduire la troisième erreur, tandis qu'un coefficient inclus dans le modèle de discrimination est fixé sans être changé ; et
la mise à jour du deuxième modèle de prédiction par un traitement de conversion consistant à convertir le troisième modèle de prédiction entraîné (S122, S123),
dans lequel
le premier modèle de prédiction, le deuxième modèle de prédiction et le troisième modèle de prédiction sont chacun un modèle de réseau neuronal, et
le traitement de conversion comporte le traitement de la compression du troisième modèle de réseau neuronal.

2. Procédé de traitement d'informations selon la revendication 1, comprenant en outre :
l'obtention d'un autre troisième résultat de prédiction en entrant une autre donnée des deuxièmes données d'image dans le deuxième modèle de prédiction mis à jour ;
l'entraînement supplémentaire du troisième modèle de prédiction par apprentissage machine sur la base de l'autre troisième résultat de prédiction obtenu ; et
la mise à jour supplémentaire du deuxième modèle de prédiction par le traitement de conversion sur le troisième modèle de prédiction soumis à l'entraînement supplémentaire.

3. Procédé de traitement d'informations selon la revendication 1, dans lequel
le traitement de la compression du modèle de réseau neuronal comporte le traitement d'une quantification du modèle de réseau neuronal.

4. Procédé traitement d'informations selon la revendication 3, dans lequel
le traitement de quantification du modèle de réseau neuronal comporte le traitement de la conversion d'un coefficient du modèle de réseau neuronal d'un format à virgule flottante à un format à virgule fixe.

5. Procédé de traitement d'informations selon l'une des revendications 1, 3 et 4, dans lequel
le traitement de la compression du modèle de réseau neuronal comporte un parmi : un traitement consistant à réduire les nœuds du modèle de réseau neuronal ; et un traitement consistant à réduire les connections de nœuds du modèle de réseau neuronal.

6. Procédé de traitement d'informations selon l'une des revendications 1 à 5, comprenant en outre :
l'obtention d'un quatrième résultat de prédiction en entrant une quantité de caractéristiques dans le modèle de discrimination, la quantité de caractéristiques étant obtenue en entrant les premières données dans le premier modèle de prédiction, dans lequel
l'entraînement du modèle de discrimination comporte l'entraînement du modèle de discrimination par apprentissage machine en utilisant en outre une quatrième erreur qui indique une différence entre le premier résultat de prédiction et le quatrième résultat de prédiction.

7. Procédé de traitement d'informations selon l'une des revendications 1 à 6, comprenant en outre :
l'ajout d'un bruit au deuxième résultat de prédiction, dans lequel
l'obtention des deuxièmes informations de discrimination comporte l'obtention des deuxièmes informations de discrimination en entrant, dans le modèle de discrimination, le deuxième résultat de prédiction auquel le bruit a été ajouté.

8. Procédé de traitement d'informations selon la revendication 7, dans lequel
le bruit est déterminé sur la base d'une largeur discrète du deuxième résultat de prédiction.

9. Procédé de traitement d'informations selon la revendication 8, dans lequel
le bruit comporte un bruit gaussien, et
une amplitude de distribution du bruit gaussien est déterminée sur la base d'un écart type du bruit gaussien et de la largeur discrète du deuxième résultat de prédiction.

10. Procédé de traitement d'informations selon la revendication 9, dans lequel
l'amplitude de la distribution du bruit gaussien est déterminée pour chaque plage prédéterminée d'une composante d'élément du deuxième résultat de prédiction.

11. Procédé de traitement d'informations selon la revendication 9 ou 10, dans lequel
l'amplitude de la distribution du bruit gaussien est déterminée pour chaque plage prédéterminée d'une composante de canal du deuxième résultat de prédiction.

12. Procédé de traitement d'informations selon l'une des revendications 7 à 11, dans lequel
le bruit est ajouté à une partie du deuxième résultat de prédiction, la partie ayant une composante d'élément prédéterminée.

13. Procédé de traitement d'informations selon l'une des revendications 7 à 12, dans lequel
le bruit est ajouté à une partie du deuxième résultat de prédiction, la partie ayant une composante de canal prédéterminée.

14. Procédé de traitement d'informations selon l'une des revendications 1 et 3 à 7, comprenant en outre :
l'ajout d'un bruit au deuxième résultat de prédiction, dans lequel
l'obtention des deuxièmes informations de discrimination comporte l'obtention des deuxièmes informations de discrimination en entrant dans le modèle de discrimination le deuxième résultat de prédiction auquel le bruit a été ajouté,
le bruit comporte un bruit gaussien,
le bruit gaussien est déterminé sur la base d'une largeur discrète du deuxième résultat de prédiction, et
la largeur discrète est déterminée sur la base d'un paramétrage de conversion du traitement de conversion.

15. Système de traitement d'informations pour identifier des images contenues dans des données d'image comprenant :
un dispositif d'obtention qui obtient des troisièmes données d'image ; et
un prédicteur qui obtient un deuxième résultat de prédiction en entrant les troisièmes données obtenues par le dispositif d'obtention dans un deuxième modèle de prédiction, et qui délivre le deuxième résultat de prédiction, dans lequel
le deuxième modèle de prédiction est obtenu :
en obtenant un premier résultat de prédiction en entrant des premières données d'image dans un premier modèle de prédiction ;
en obtenant un deuxième résultat de prédiction en entrant les premières données d'image dans le deuxième modèle de prédiction ;
en obtenant des premières informations de discrimination en entrant le premier résultat de prédiction dans un modèle de discrimination qui délivre des informations de discrimination indiquant si les informations entrées sont une sortie du premier modèle de prédiction ou une sortie du deuxième modèle de prédiction, les premières informations de discrimination étant les informations de discrimination sur le premier résultat de prédiction entré ;
en obtenant une première erreur indiquant une différence entre les premières informations de discrimination et des informations de réponse correctes indiquant que les informations entrées sont une sortie du premier modèle de prédiction ;
en obtenant des deuxièmes informations de discrimination en entrant le deuxième résultat de prédiction dans le modèle de discrimination, les deuxièmes informations de discrimination étant les informations de discrimination sur le deuxième résultat de prédiction entré ;
en obtenant une deuxième erreur indiquant une différence entre les deuxièmes informations de discrimination et des informations de réponse correctes indiquant que les informations entrées sont une sortie du deuxième modèle de prédiction ;
en entraînant le modèle de discrimination par apprentissage machine pour réduire la première erreur et la deuxième erreur ;
en obtenant un troisième résultat de prédiction en entrant des deuxièmes données dans le deuxième modèle de prédiction ;
en obtenant des troisièmes informations de discrimination en entrant le troisième résultat de prédiction dans le modèle de discrimination entraîné, les troisièmes informations de discrimination étant les informations de discrimination sur le troisième résultat de prédiction entré ;
en obtenant une troisième erreur indiquant une différence entre les troisièmes informations de discrimination et des informations de réponse correctes indiquant que les informations entrées sont une sortie du premier modèle de prédiction ;
en entraînant un troisième modèle de prédiction par apprentissage machine pour réduire la troisième erreur, tandis qu'un coefficient inclus dans le modèle de discrimination est fixé sans être changé ; et
en mettant à jour le deuxième modèle de prédiction par un traitement de conversion consistant à convertir le troisième modèle de prédiction entraîné,
dans lequel
le premier modèle de prédiction, le deuxième modèle de prédiction et le troisième modèle de prédiction sont chacun un modèle de réseau neuronal, et
le traitement de conversion comporte le traitement de la compression du modèle de réseau neuronal.
